# EUROPEAN PATENT APPLICATION

(11) **EP 4 257 663 A1**
(43) Date of publication of application: **11.10.2023**
(21) Application number: 22166646.4
(22) Date of filing: 05.04.2022
(51) Int. Cl.: C11D 1/02, C11D 3/20, C11D 3/50, C11D 3/48

(54) **FOOD CONTACT SURFACE SANITIZING LIQUID**

(71) Applicant: The Procter & Gamble Company, Cincinnati, OH 45202 (US)
(72) Inventor: SHERRY, Alan Edward, Cincinnati, 45202 (US); PEREZ-PRAT VINUESA, Eva Maria, 2405 Louveira (Sao Paulo), CEP 13290-000 (BR)
(74) Representative: P&G Patent Belgium UK

(57) **Abstract**

A fragranced liquid composition for treating inanimate surfaces which contact food, the composition comprising: (a) from about 0.01% to about 10% by weight of the composition of an organic acid selected from the group consisting of acetic acid, decanoic acid, hexanoic acid, lactic acid, lauric acid, nonanoic acid, propionic acid, benzoic acid, methane sulfonic acid, octanoic acid, citric acid and its salts, fumaric acid, sorbic acid and mixtures thereof; (b) from about 0.02% to about 10% by weight of the composition of an anionic surfactant selected from the group consisting of alkyl sulphate, alkyl alkoxylated sulphate, alkyl benzene sulphonic acid, alkyl benzene sulphonate, sarcosinate, sulphosuccinate and mixtures thereof; (c) a fragrance wherein at least 90% by weight of the fragrance comprises fragrance components selected from Table 1 and/or Table 2; (d) water; and (e) optionally, one or more adjuncts selected from the group consisting of: buffers, builders, solvents, stabilizers, defoamers, thickeners, hydrotropes, pH adjusters and preservatives; and wherein the composition has a pH of from about 2 to about 4.5 as measured at 20°C.

## Description

### FIELD OF THE INVENTION

The present invention is generally related to compositions used to clean inanimate surfaces, particularly surfaces that are intended to come into contact with food (e.g., dishes, countertops, tables, utensils, food-processing equipment and utensils, etc.).

### BACKGROUND OF THE INVENTION

Various liquid compositions are available for use to clean and additionally sanitize hard surfaces. Generally, such compositions are effective in reducing microbial populations on such surfaces, although the use of many such existing compositions may be inappropriate for use on surfaces that are expected to come in contact with food. For example, when cleaning food contact surfaces, it is desirable to limit the presence of components which may exhibit unwanted effects if inadvertently contacted with food, and possibly ingested. Similar considerations may apply to surfaces routinely handled by children, as they are more prone to put their hands in their mouths after touching or otherwise handling such a surface (e.g., toys, high-chairs, tables, cribs, etc.).

Balancing such a need to prevent or minimize inadvertent food contact and possible ingestion of components of the composition with the need for such compositions to be effective in cleaning and killing microbes presents a challenge of competing requirements.

WO 2017/099964 A1 presents a food contact surface sanitizing liquid based on quaternary ammonium compounds. While the quaternary ammonium compounds are effective, they have certain limitations, for example, they can be incompatible with anionic surfactants and this can impact on the cleaning properties of the composition. The object of the present invention is to provide a food contact surface composition with good cleaning and shine properties, with a good environmental profile and which additionally provides sanitization.

### SUMMARY OF THE INVENTION

According to the first aspect of the invention, there is provided a composition for cleaning and sanitizing inanimate surfaces which may contact food. The composition may be provided in liquid form, and comprises one or more anionic surfactants, one or more organic acids, a fragrance wherein at least 90% by weight of the fragrance comprises fragrance components selected from those listed in Table 1 and/or Table 2, and water. The pH of the composition is between 2 and 4.5, preferably between 2.3 and 3.5 as measured at 20°C. The composition may optionally include additional surfactants, solvents, chelants, hydrotropes, additional antimicrobial compounds and polymers. Preferably, the composition is substantially free of quaternary ammonium antimicrobial compounds. At least 90% by weight of the fragrance comprises fragrance components selected from those listed in Table 1 and/or Table 2, preferably at least 90% by weight of the fragrance comprises fragrance components selected from those listed in Table 1. All other components of the composition preferably meet the EPA guidelines under CFR 180.940, CFR 180.950 or CFR 180.960. The composition is safe for application to surfaces that come in contact with food.

The composition is able to provide cleaning and/or shine and/or a high level of sanitization (i.e., killing of microbes) to such surfaces because of the presence of the organic acid and anionic surfactant. The presence of the fragrance provides a particular benefit in that the cleanining composition is thus scented or fragranced, which provides an important aesthetic benefit to end users, who would appreciate the fragranced characteristics of the composition over an otherwise similar composition, but which does not include a desirable fragrance. In addition, the fragrance may help to make the unpleasant smell of some of the organic acids such as for example acetic acid and octanoic acid, less perceptible by the user. In other words, the composition may exhibit an aesthetically desirable scent or fragrance (used interchangeably herein), such as may be provided by one or more essential oils, or other fragrance component, rather than a "chemical" or "cleaner" odor associated with the combination of components included within such a composition for other purposes. In other words, rather than having the scent of a surfactant, an acid, or other chemical constituents that are included for purposes other than fragrance, the composition provides an aesthetically desirable scent thereto, by including a fragrance component which is included specifically for this purpose.

According to the second aspect of the invention, there is provided a method to sanitize a food contact inanimate surface including contacting a food contact surface with the composition of the invention.

The elements of the invention described in relation to the first aspect of the invention apply *mutatis mutandis* to the second aspect of the invention.

### DETAILED DESCRIPTION OF THE INVENTION

The present invention envisages a cleaning composition for surfaces which may contact food. The composition may also provide shine and a pleasant scent of the treated surface.

The compositions described herein may provide cleaning, shine, sanitization, disinfection, or sterilization. As used herein, the term "sanitize" shall mean the reduction of contaminants in the inanimate environment to levels considered safe according to public health ordinance, or that reduces the bacterial population by significant numbers where public health requirements have not been established. By way of example, an at least 99% reduction in bacterial population within a 24 hour time period is deemed "significant." Greater levels of reduction are possible, as are faster treatment times (e.g., within 1 minute), when sanitizing. As used herein, the term "disinfect" shall mean the elimination of many or all pathogenic microorganisms on surfaces with the exception of bacterial endospores. As used herein, the term "sterilize" shall mean the complete elimination or destruction of all forms of microbial life and which is authorized under the applicable regulatory laws to make legal claims as a "sterilant" or to have sterilizing properties or qualities. Some embodiments of the present compositions provide for at least a 3 or more log reduction in bacterial population within a designated time period. A 3-log reduction is equivalent to at least a 99.9% reduction, a 4-log reduction is equivalent to at least a 99.99% reduction, a 5-log reduction is equivalent to at least a 99.999%) reduction, etc.

The term "food contact surface" means as defined by the EPA and/or FDA. For example, the FDA defines the term in its "Food Code" 1-201.10 as (1) a surface of equipment or a utensil with which food normally comes into contact; or (2) a surface of equipment or a utensil from which food may drain, drip, or splash (a) into a food, or (b) onto a surface normally in contact with food.

As used herein, the articles including "the," "a" and "an" when used in a claim or in the specification, are understood to mean one or more of what is claimed or described.

As used herein, the terms "include," "includes" and "including" are meant to be nonlimiting.

The term "substantially free of" or "substantially free from" as used herein refers to either the complete absence of an ingredient or a minimal amount thereof merely as impurity or unintended byproduct of another ingredient. A composition that is "substantially free" of/from a component means that the composition comprises less than about 0.005%, or even 0%, by weight of the composition, of the component.

In this description, all concentrations and ratios are on a weight basis of the composition unless otherwise specified.

Unless otherwise noted, all component or composition levels are in reference to the active portion of that component or composition, and are exclusive of impurities, for example, residual solvents or by-products, which may be present in commercially available sources of such components or compositions.

All measurements are performed at 20°C unless otherwise specified.

### Composition

The composition of the present invention comprises organic acid, anionic surfactant, a fragrance, and water. The pH of the composition is from 2 to 4.5, preferably 2.3 to 3.5.

### Anionic surfactant

The composition comprises an anionic surfactant and it may comprise additional surfactants. The anionic surfactant can be selected from the group consisting of alkyl sulphate, alkyl alkoxylated sulphate, alkyl benzene sulphonic acid, alkyl benzene sulphonate, sarcosinate, sulphosuccinate and mixtures thereof.

The alkyl sulphate, alkyl alkoxylated sulphate, alkyl benzene sulphonic acid, and alkyl benzene sulphonate surfactants may be linear or branched, substituted or un-substituted.

Preferred anionic surfactants are: Alkylbenzene sulfonates (branched and linear) of chain lengths C10-C16, including benzenesulfonic acid dodecyl and benzenesulfonic acid dodecyl-, sodium salt (CAS numbers 27176-87-0 and 25155-30-0); Sodium lauroyl sarcosinate (CAS number 137-16-6); Sulfuric acid monododecyl ester, sodium salt (sodium lauryl sulfate, CAS number 151-21-3); 1-octanesulfonic acid (CAS number 3944-72-7); 1-octanesulfonic acid sodium salt (CAS re. number 5324-84-5); dioctyl sulphosuccinate sodium salt (CAS number 577-11-7) and mixtures thereof.

The concentration of the anionic surfactant in the fragranced sanitizing composition is between 0.02% and 10%, preferably 0.03% and 5%, more preferably 0.035% and 1%. When present in a ready to use sanitizing liquid composition the concentration of the alkylbenzene sulfonate surfactants does not exceed 700 ppm; when present in a ready to use sanitizing liquid composition the concentration of the sodium lauroyl sarcosinate surfactant does not exceed 10000 ppm; when present in a ready to use sanitizing liquid composition the concentration of the sodium lauryl sulphate surfactant does not exceed 350 ppm, , when present in a ready to use sanitizing liquid composition the concentration of 1-octanesulfonic acid, sodium salt surfactant does not exceed 297 ppm, when present in a ready to use sanitizing liquid composition the concentration of dioctyl sulphosuccinate surfactant does not exceed 100000 ppm.

### Organic Acid

The fragranced sanitizing composition comprises an organic acid selected from the group consisting of any of the organic acids shown in the table below and mixtures thereof:

| **Organic Acid** | **CAS Reg. No.** |
|---|---|
| Acetic acid | 64-19-7 |
| Adipic acid | 124-04-9 |
| Butryic acid | 107-92-6 |
| Decanoic acid | 334-48-5 |
| Hexanoic acid | 142-62-1 |
| Lactic acid | 50-21-5 |
| Lauric acid | 143-07-7 |
| Myristic acid | 544-63-8 |
| Methane sulfonic acid | 75-75-2 |
| Nonanoic acid | 112-05-0 |
| Octadecanoic acid, calcium salt | 1592-23-0 |
| Octanoic acid | 124-07-2 |
| Palmitic acid | 57-10-3 |
| Propionic acid | 79-09-4 |
| Stearic acid. | 57-11-4 |
| Valeric acid | 109-52-4 |
| Ascorbic acid | 50-81-7 |
| Benzoic acid, sodium salt | 532-32-1 |
| Citric acid | 77-92-9 |
| Citric acid, calcium salt | 7693-13-2 |
| Citric acid, calcium salt (2:3) | 813-94-5 |
| Citric acid, dipotassium salt | 3609-96-9 |
| Citric acid, sodium salt | 994-36-5 |
| Citric acid, trisodium salt | 68-04-2 |
| Citric acid, trisodium salt, dihydrate | 6132-04-3 |
| Citric acid, trisodium salt, pentahydrate | 6858-44-2 |
| Fumaric acid | 110-17-8 |
| Humic acid | 1413-93-6 |
| Humic acid, potassium salt | 68514-28-3 |
| Humic acid, sodium salt | 68131-04-4 |
| Sorbic acid, potassium salt | 24634-61-5 |

Preferred organic acids are selected from the group consisting of acetic acid, decanoic acid, hexanoic acid, lactic acid, lauric acid, nonanoic acid, benzoic acid, methane sulfonic acid, octanoic acid, citric acid and its salts, fumaric acid, sorbic acid, and mixtures thereof. Most preferred organic acids are selected from the group consisting of acetic acid, citric acid, lactic acid, octanoic acid, benzoic acid, sorbic acid, fumaric acid and mixtures thereof. The concentration of the organic acid in the fragranced antimicrobial composition is from 0.01% to 10%, preferably 0.02% to 8%, more preferably 0.025% to 5%. When present in a ready to use sanitizing liquid composition de concentration of acetic acid does not exceed 100 ppm, when present in a ready to use sanitizing liquid composition de concentration of octanoic acid does not exceed 100 ppm, when present in a ready to use sanitizing liquid composition de concentration of lactic acid does not exceed 10000 ppm, when present in a ready to use sanitizing liquid composition de concentration of citric acid does not exceed 100000 ppm, when present in a ready to use sanitizing liquid composition de concentration of benzoic acid does not exceed 100000 ppm, when present in a ready to use sanitizing liquid composition de concentration of fumaric acid does not exceed 100000 ppm, when present in a ready to use sanitizing liquid composition de concentration of sorbic acid does not exceed 100000 ppm. The pH of the composition is between 2 and 4.5, preferably 2.1 and 4, more preferably 2.3 and 3.5 as measured at 20°C.

### Fragrance

The present compositions advantageously comprise a fragrance, providing a fragranced sanitizing liquid composition effective to sanitize food contact surfaces. As described herein, the fragrance may include only components from Table 1 or from Table 2 or from both. Where the fragrance comprises a mixture of essential oils, at least 90% of the fragrance components (e.g., a mixture of essential oils) are selected from Table 1 or from Table 2 or from both The listing in Table 1 below includes chemically-defined fragrance ingredients, as well as ingredients derived from botanical sources (a.k.a. "naturals"). The chemically-defined fragrance ingredients have been reviewed by the joint F AO/WHO Expert Committee on Food Additives (JECFA). Starting with a listing of 1075 materials, 838 were chemically- defined, allowing for direct classification via the Cramer classification system. The published JECFA monographs for these materials were reviewed and assigned as by JECFA. Of the 838 chemically-defined materials, 664 are classified in Class I of the Cramer classification system. 131 are classified in Class II of the Cramer classification system, and 43 are classified in Class III of the Cramer classification system. 220 of the 1058 materials are derived from botanical sources (e.g., orange oil, etc.). In order to classify these materials as to their Cramer classes, a constituent based approach was employed, wherein quantitative analytical information was collected on each "natural" material. Following collection of the analytical data, each constituent was assigned a Cramer class. Of the 220, 64 had constituent assignments where all constituents were Class I. Of the remaining 156 materials, 21 had constituent assignments where Class I accounted for at least 90%, (e.g., greater than 90%) of the assay, with the remainder being Class II constituents only. Of the remaining 135, 55 had constituent assignments where Class I accounted for at least 90% (e.g., greater than 90%) of the assay, with the remainder constituents being Class II or Class III. The remaining 80 materials had constituents where Class III accounted for greater than 90% of the assay.

The fragrance may be included in an amount from 0.01 to 5 weight percent, 0.1 to 5.0 weight percent, 0.1 to 4.0 weight percent, 0.1 to 3.0 weight percent, 0.1 to 2.0 weight percent, 0.1 to 1.0 weight percent, 0.2 to 1 weight percent, 0.3 to 1 weight percent, 0.2 to 0.5 weight percent, 0.4 to 1 weight percent, 0.5 to 1 weight percent, at least 0.05 weight percent, at least 0.1 weight percent, at least 0.2 weight percent, at least 0.3 weight percent, at least 0.4 weight percent, or at least 0.5 weight percent.

**Table 1**

| **CAS Number** | **Chemical Name** | **OtherName** |
|---|---|---|
| Aliphatic, linear alpha, beta-unstaurated aldehydes, acids, and related alcohols | | |
| 3913-71-1 | 2-Decenal | 2-Decenal |
| 6728-26-3 | Hexen-2-al | 2-Hexenal, (2E)- |
| 111-79-5 | Methyl 2-nonenoate | 2-Nonenoic acid, methyl ester |
| 111-80-8 | Methyl 2-nonynoate | 2-Nonenoic acid, methyl ester |
| 111-12-6 | Methyl 2-octynoate | |
| Aliphatic acyclic acetals | | |
| 28069-74-1 | Acetaldehyde ethyl cis-3-hexenyl acetal | 3-Hexene, 1-(1-ethoxyethoxy)-, (3Z)- |
| 7492-66-2 | 1,1-diethoxy-3,7-dimethylocta-2,6-diene | 2,6-Octadiene, 1, 1-diethoxy-3,7-dimethyl- |
| 10022-28-3 | Octanal dimethyl acetal | Octane, 1,1-dimethoxy- |
| Aliphatic acyclic and alicyclic terpenoid tertiary alcohols and stmcturally related substances | | |
| 151-05-3 | Alpha, alpha-Dimethylphenethy1 acetate | Benzeneethanol, .alpha.,alpha.-dimethyl-, acetate |
| 10094-34-5 | Alpha, alpha-Dimethylphenethy 1 butyrate | Butanoic acid, 1,1-dimethyl-2-phenylethyl ester |
| 78-70-6 | Linalool | 1,6-Octadien-3-ol, 3,7-dimethyl- |
| 115-95-7 | Linalyl acetate | 1,6-Octadien-3-ol, 3,7-dimethyl-, acetate |
| 7212-44-4 | Nerolidol (isomer unspecified) | 1,6,10-Dodecatrien-3-ol, 3,7,11-trimethyl- |
| 98-55-5 | Alpha-Terpineol | 3 -Cyclohexene-a-methanol, .alpha.,.alpha.,4- |
| | | trimethyl- |
| 8007-35-0 | Terpinyl acetate (Isomer mixture) | Terpineol, acetate |
| 78-69-3 | Tetrahydrolinalool | 3-Octanol, 3,7-dimethy1- |
| Aliphatic acyclic diols, triols, and related agents | | |
| 102-76-1 | (tri-)Acetin | 1,2,3-Propanetriol, triacetate |
| Aliphatic and alicyclic hydrocarbons | | |
| 87-44-5 | Beta-Caryophy llene | Bicyclo[7.2.0]undec-4-ene,4,l **l,l** l-trimethyl-8- methylene-, (1R,4E,9S)- |
| 98-85-4 | p-Mentha-1,4-diene | 1,4-Cyclohexadiene, 1-methyl-4-(1-methylethyl)- |
| 80-56-8 | Alpha-Pinene | Bicyclo[3 **.**1.1]hept-2-ene,2,6,6-trimethyl- |
| 127-91-3 | Beta-Pinene | Bicyclo[3 .1.1]hept-2-ene, 2,6,6-trimethyl- |
| 586-62-9 | Terpinolene | Cyclohexene, 1-methyl-4-(1-methylethylidene)- |
| Aliphatic and aromatic ethers | | |
| 101-84-8 | Diphenyl ether | Benzene, 1,1'-oxybis- |
| 470-82-6 | Eucalyptol | 2-Oxabicyclo[2.2.2]octane, 1,3,3-trimethyl- |
| 104-98-8 | p-Methylanisole | Benzene, 1-methoxy-4-methy1- |
| 16409-43-1 | Tetrahydro-4-methyl-2-(2-methylpropen-1-y l)pyran | 2H-Pyran, tetrahydro-4-methy 1 -2-(2-methy 1-1-propeny1)- |
| Aliphatic branched-chain unsaturated alcohols, aldehydes, acids, and related esters | | |
| 106-23-0 | Citronellal | 6-Octenal, 3,7-dimethyl- |
| 106-25-2 | Nerol | 2,6-Octadien-1-ol, 3,7-dimethyl-, (2Z)- |
| Aliphatic di-and trienals and related alcohols, acids, and esters | | |
| 3025-30-7 | Ethyl (2E,4Z)-2,4-decadienoate | 2,4-Decadienoic acid, ethyl ester, (2E,4Z)- |
| 557-48-2 | Nona-2-trans-6-cis-dienal | 2,6-Nonadienal, (2E,6Z)- |
| Aliphatic lactones | | |
| 706-14-9 | gamrna-Decalactone | 2(3H)-Furanone, 5-hexvldihydro- |
| 105-21-5 | gamrna-Heptalactone | 2(3H)-Furanone, dihydro-5-propyl- |
| 695-06-7 | gamma- Hexalactone | (3H)-Furanone, 5-ethyldihydro- |
| 3301-94-8 | Hydroxynonanoic acid, delta lactone | |
| 710-04-3 | 5-Hydroxyundecanoic acid lactone | 2H-Pyran-2-one, 6-hexyltetrahydro- |
| 28645-51-4 | Oxacycloheptadec-10-ene-2-one | Oxacycloheptadec-10-en-2-one |
| 104-61-0 | gamrna-Nonalactone | 2(3H)-Furanone, dihydro-5-pentyl- |
| 104-50-7 | gamrna-Octalactone | 2(3H)-Furanone, 5-butyldihydro- |
| 106-02-5 | omega-Pentadecalactone | Oxacyclohexadecan-2-one |
| 104-67-6 | gamma-Undecalactone | 2(3H)-Furanone, 5-heptyldihydro- |
| Aliphatic secondary alcohols, ketones and related esters and acetals | | |
| 81925-81-7 | 5-Methyl-2-hepten-4-one | |
| 110-93-0 | 6-Methyl-5-hepten-2-one | 5-Hepten-2-one, 6-methyl- |
| Ally1 esters | | |
| 123-68-2 | Ally hexanoate | Hexanoic acid, 2-propenyl ester |
| Alphatic primary alcohols, aldehydes, carboxylic acids, acetals and esters | | |
| 105-53-3 | Diethyl rnalonate | Propanedioic acid, diethyl ester |
| 141-97-9 | Ethyl acetoacetate | Butanoic acid, 3-oxo-, ethyl ester |
| 105-95-3 | Ethylene brassylate | 1,4-Dioxacycloheptadecane-5,17-dione |
| 107-75-5 | Hydroxycitronellal | Octanal, 7-hydroxy-3,7-dimethyl- |
| 107-74-4 | Hydroxycitronellol | 1,7-Octanediol, 3,7-dimethyl- |
| 705-86-2 | delta-Decalactone | 2H-Pvran-2-one, tetrahydro-6-pentv1- |
| 77-93-0 | Triethylcitrate | 1,2,3-Propanetricarboxylic acid, 2-hydroxy-, triethyl ester |
| Anthranilate derivatives | | |
| 134-20-3 | Methyl anthranilate | Benzoic acid, 2-amino-, methyl ester |
| 85-91-6 | Methyl N-methylanthranilate | Benzoic acid, 2-(methylamino)-, methyl ester |
| Aromatic hydrocarbons | | |
| 99-87-6 | p-Cymene | Benzene, 1-methyl-4-(1-methylethyl)- |
| Aromatic substituted secondary alcohols, ketones, and related ester | | |
| 98-86-2 | Acetophenone | Ethanone, 1-phenyl- |
| 122-00-9 | 4' -Methylacetophenone | Ethanone, 1(4-methylpheny1)- |
| 93-92-5 | alpha-Methylbenzvl acetate | Benzenemethanol, alpha.-methyl-, acetate |
| 98-85-1 | alpha-Methylbenzyl alcohol | Benzenemethanol, alpha.-methyl- |
| 93-08-3 | Methyl beta-naphthyl ketone | Ethanone, 1-(2-naphthaleny1)- |
| Benzyl derivatives | | |
| 100-52-7 | Benzaldehyde | Benzaldehyde |
| 140-11-4 | Benzvl acetate | Acetic acid, phenylmethyl ester |
| 100-51-6 | Benzyl alcohol | Benzenemethanol |
| 103-37-7 | Benzyl butyrate | Butanoic acid, phenylmethyl ester |
| 103-28-6 | Benzyl isobutyrate | Propanoic acid, 2-methyl-, phenylmethyl ester |
| 122-63-4 | Benzvl propionate | Propanoic acid, phenylmethyl ester |
| 122-03-2 | Curninaldehyde | Benzaldehyde, 4-(1-methylethy1)- |
| 93-89-0 | Ethyl benzoate | Benzoic acid, ethyl ester |
| 93-58-3 | Methyl benzoate | Benzoic acid, methyl ester |
| Carvone and structurally related substances | | |
| 20777-49-5 | Dihydrocarvvl acetate | |
| Cinnamy 1 derivatives | | |
| 104-55-2 | Cinnarnaldehyde | 2 Propenal, 3-phenyl- |
| 104-54-1 | Cinnamyl alcohol | 2-Propen-1-ol, 3-phenyl- |
| 101-86-0 | alpha-Hexy lcinnarnaldehyde | Octanal, 2-(pheny lmethylene)- |
| 101-39-3 | alpha-Methy lcinnamaldehyde | 2-Propenal, 2-methyl-3-phenyl- |
| 103-26-4 | Methyl cinnarnate | 2 Propenoic acid, 3-phenyl-, methyl ester |
| 122-97-4 | 3-Phenyl 1-propanol | Benzenepropanol |
| Esters of aliphatic acyclic primary alcohols with aliphatic linear saturated carboxylie acids | | |
| 16491-36-4 | cis-3-Hexenyl butyrate | Butanoic acid, (3Z)-3-hexenyl ester |
| 31501-11-8 | cis-3-Hexenyl hexanoate | Hexanoic acid, (3Z)-3-hexenyl ester |
| 2639-63-6 | Hexy1 butyrate | Butanoic acid, hexyl ester |
| 6378-65-0 | Hexy1 hexanoate | Hexanoic acid, hexyl ester |
| 2445-76-3 | Hexyl propionate | |
| 110-19-0 | Ixobutyl acetate | |
| 112-19-6 | 10-Undecen-1-yl acetate | |

**Table 2**

| CAS Number | Chemical Name |
|---|---|
| 100-06-1 | Acetanisole |
| 10032-15-2 | Hexyl 2-methylbutanoate |
| 100-86-7 | *alpha,alpha*-Dimethylphenethyl alcohol |
| 10094-41-4 | 3-Hexenyl 2-methylbutanoate |
| 101-41-7 | Methyl phenyl acetate |
| 101-84-8 | Diphenyl ether |
| 101-86-0 | alpha-Hexylcinnamaldehyde |
| 101-94-0 | p-Tolyl phenylacetate |
| 101-97-3 | Ethyl phenylacetate |
| 102-13-6 | Isobutyl phenylacetate |
| 102-16-9 | Benzyl phenylacetate |
| 102-19-2 | Isoamyl phenylacetate |
| 102-22-7 | Geranyl phenylacetate |
| 103-07-1 | 2-Methyl-4-phenyl-2-butyl acetate |
| 103-36-6 | Ethyl cinnamate |
| 103-38-8 | Benzyl isovalerate |
| 103-41-3 | Benzyl cinnamate |
| 103-52-6 | Phenethyl butyrate |
| 103-53-7 | Phenethyl cinnamate |
| 103-54-8 | Cinnamyl acetate |
| 103-56-0 | Cinnamyl propionate |
| 103-59-3 | Cinnamyl isobutyrate |
| 103-60-6 | 2-Phenoxyethyl isobutyrate |
| 103-82-2 | Phenylacetic acid |
| 103-93-5 | p-Tolyl isobutyrate |
| 104-09-6 | p-Tolylacetaldehyde |
| 104-20-1 | 4-(p-Methoxyphenyl)-2-butanone |
| 104-21-2 | Anisyl acetate |
| 104-45-0 | p-Propylanisole |
| 104-53-0 | 3-Phenylpropionaldehyde |
| 104-55-2; 14371-10-9 | Cinnamaldehyde |
| 104-57-4 | Benzyl formate |
| 10458-14-7 | Menthone |
| 104-62-1 | Phenethyl formate |
| 104-65-4 | Cinnamyl formate |
| 104-76-7 | 2-Ethyl-1-hexanol |
| 105-01-1 | Isobutyl 3-(2-furan)propionate |
| 105-37-3 | Ethyl propionate |
| 105-57-7 | Acetal |
| 105-68-0 | Isoamyl propionate |
| 105-85-1 | Citronellyl formate |
| 105-86-2 | Geranyl formate |
| 105-90-8 | Geranyl propionate |
| 106-21-8 | 3,7-Dimethyl-1-octanol |
| 106-22-9 | *dl*-Citronellol |
| 106-23-0 | Citronellal |
| 106-24-1 | Geraniol |
| 106-29-6 | Geranyl butyrate |
| 106-35-4 | 3-Heptanone |
| 106-44-5 | p-Cresol |
| 106-68-3 | 3-Octanone |
| 106-70-7 | Methyl hexanoate |
| 1076-56-8 | 1-Methyl-3-methoxy-4-isopropylbenzene |
| 107-87-9 | 2-Pentanone |
| 108-21-4 | Isopropyl acetate |
| 108-29-2 | *gamma*-Valerolactone |
| 108-50-9 | 2,6-Dimethylpyrazine |
| 108-64-5 | Ethyl isovalerate |
| 108-82-7 | 2,6-Dimethyl-4-heptanol |
| 108-83-8 | 2,6-Dimethyl-4-heptanone |
| 109-08-0 | 2-Methylpyrazine |
| 109-19-3 | Butyl isovalerate |
| 109-21-7 | Butyl butyrate |
| 109-42-2 | Butyl 10-undecenoate |
| 109-94-4 | Ethyl formate |
| 110-27-0 | Isopropyl myristate |
| 110-40-7 | Diethyl sebacate |
| 110-43-0 | 2-Heptanone |
| 11050-62-7 | Isojasmone |
| 110-93-0 | 6-Methyl-5-hepten-2-one |
| 111-11-5 | Methyl octanoate |
| 111-13-7 | 2-Octanone |
| 111-62-6 | Ethyl oleate |
| 1117-55-1 | Hexyl octanoate |
| 111-81-9 | Methyl 10-undecenoate |
| 1118-27-0 | Linalyl isovalerate |
| 112-06-1 | Heptyl acetate |
| 112-12-9 | 2-Undecanone |
| 112-14-1 | Octyl acetate |
| 112-17-4 | Decyl acetate |
| 1123-85-9 | beta-Methylphenethyl alcohol |
| 112-38-9 | 10-Undecenoic Acid |
| 112-45-8 | 10-Undecenal |
| 112-66-3 | Lauryl acetate |
| 112-80-1 | Oleic Acid |
| 1128-08-1 | 3-Methyl-2-(n-pentanyl)-2-cyclopenten-1-one |
| 1139-30-6 | beta-Caryophyllene oxide |
| 115-71-9 (α) 77-42-9 (β 11031-45-1) | Santalol |
| 115-95-7 | Linalyl acetate |
| 115-99-1 | Linalyl formate |
| 116-02-9 | 3, 5, 5-Trimethylcyclohexanol |
| 116-53-0 | 2-Methylbutyric acid |
| 118-58-1 | Benzyl salicylate |
| 118-71-8 | Maltol |
| 119-36-8 | Methyl salicylate |
| 1193-81-3 | (±)-1-Cyclohexylethanol |
| 1195-32-0 | p, alpha-Dimethyl styrene |
| 119-65-3 | Isoquinoline |
| 1197-01-9 | *p-alpha,alpha*-Trimethylbenzyl alcohol |
| 120-11-6 | Isoeugenyl benzyl ether |
| 120-45-6 | alpha-Methylbenzyl propionate |
| 120-50-3 | Isobutyl benzoate |
| 120-51-4 | Benzyl benzoate |
| 120-57-0 | Piperonal |
| 1207-44-0 | Prenyl benzoate |
| 121-32-4 | Ethyl vanillin |
| 121-33-5 | Vanillin |
| 121-39-1 | Ethyl 3-phenylglycidate |
| 121-98-2 | Methyl anisate |
| 122-40-7 | alpha-Amylcinnamaldehyde |
| 122-48-5 | Zingerone |
| 122-67-8 | Isobutyl cinnamate |
| 122-68-9 | 3-Phenylpropyl cinnamate |
| 122-69-0 | Cinnamyl cinnamate |
| 122-70-3 | Phenethyl propionate |
| 122-72-5 | 3-Phenylpropyl acetate |
| 122-78-1 | Phenyl acetal dehyde |
| 122-91-8 | Anisyl formate |
| 123-07-9 | p-Ethylphenol |
| 123-32-0 | 2,5-Dimethylpyrazine |
| 123-51-3 | Isoamyl alcohol |
| 123-68-2 | Allyl hexanoate |
| 123-76-2 | Levulinic acid |
| 123-86-4 | Butyl acetate |
| 123-92-2 | Isoamyl acetate |
| 124-06-1 | Ethyl myristate |
| 124-10-7 | Methyl myristate |
| 125037-13-0; 502-61-4 | Farnesene |
| 125-12-2 | Isobornyl acetate |
| 126-64-7 | Linalyl benzoate |
| 127-17-3 | Pyruvic acid |
| 127-41-3 | alpha-Ionone |
| 127-42-4 | Methyl-alpha-ionone |
| 127-43-5 | Methyl -b eta-i onone |
| 127-91-3 | beta-Pinene |
| 13171-00-1 | 4-Acetyl-6-t-butyl-1,1-dimethylindan |
| 1322-17-4 | 1,3-Nonanediol acetate (mixed esters) |
| 133-37-9, 87-69-4 | Tartaric acid (*d-, l-, dl-, meso*-) |
| 1334-78-7 | Tolualdehydes (mixed o,m,p) |
| 13466-78-9 | 3 -Carene |
| 13481-87-3 | Methyl 3-nonenoate |
| 13494-06-9 | 3,4- Dimethyl-1,2-cycl opentadi one |
| 13532-18-8 | Methyl 3-methylthiopropionate |
| 13679-70-4 | 5-Methyl-2-thiophenecarboxyaldehyde |
| 13877 -91-3 | 3,7-Dimethyl-1,3, 6-octatriene |
| 140-11-4 | Benzyl acetate |
| 140-39-6 | p-Tolyl acetate |
| 141-12-8 | Neryl acetate |
| 141-14-0 | Citronellyl propionate |
| 141-16-2 | Citronellyl butyrate |
| 141-92-4 | Hydroxycitronellal dimethyl acetal |
| 142-19-8 | Allyl heptanoate |
| 142-50-7 | Petitgrain Oil |
| 143-13-5 | Nonyl acetate |
| 143-14-6 | 9-Undecenal |
| 143-28-2 | *cis*-9-Octadecenol |
| 144-39-8 | Linalyl propionate |
| 14765-30-1 | 2-sec-Butylcyclohexanone |
| 148-05-1 | *gamma*-Dodecalactone |
| 14901-07-6; 79-77-6 | beta-lonone |
| 150-78-7 | p-Dimethoxybenzene |
| 151-10-0 | m-Dimethoxybenzene |
| 15111-96-3 | *p*-Mentha-1,8-dien-7-yl acetate |
| 151-82-4 | 3-Hexenyl formate |
| 15356-70-4, 89-78-1, 1490-04-6 | Menthol |
| 15679-13-7 | 2-Isopropyl-4-methylthiazole |
| 15706-73-7 | *n*-Butyl 2-methylbutyrate |
| 15707-23-0 | 2-Ethyl-3 -methylpyrazine |
| 1604-28-0 | 6-Methyl-3,5-heptadien-2-one |
| 1617-23-8 | Ethyl 2-methyl-3-pentenoate |
| 16356-11-9 | 1,3,5-Undecatriene |
| 16409-43-1 | Tetrahydro-4-methyl-2-(2-methylpropen-1-yl)pyran |
| 16491-24-0 | 2,4-Hexadienyl isobutyrate |
| 16510-27-3 | 1-Cyclopropanemethyl-4-methoxybenzene |
| 1786-08-9 | Nerol oxide |
| 1866-31-5 | Allyl cinnamate |
| 197098-61-6 | 8-Ocimenyl acetate |
| 198-24-2 | 1-Octen-3-yl acetate |
| 198404-98-7 | (1-Methyl-2-(1,2,2-trimethylbicyclo[3.1.0]hex-3-ylmethyl)cyclopropyl)methanol |
| 19872-52-7 | 4-Mercapto-4-methyl-2-pentanone |
| 2021-28-5 | Ethyl 3-phenylpropionate |
| 21368-68-3 | dl-Camphor |
| 2142-94-1 | Neryl formate |
| 21722-83-8 | Cyclohexaneethyl acetate |
| 2173-57-1 | beta-Naphthyl isobutyl ether |
| 21834-92-4 | 5-Methyl-2-phenyl-2-hexenal |
| 2236-90-2 | Vanilla *(Vanilla* spp.) |
| 2239-36-8 | Mace oil (*Myristica fragrans* Houtt.) |
| 2270-60-2 | Methyl 3,7-dimethyl-6-octenoate |
| 2305-21-7 | 2-Hexen-1-ol |
| 23267-57-4 | beta-Ionone epoxide |
| 2345-26-8 | Geranyl isobutyrate |
| 2408-20-0 | Allyl propionate |
| 24168-70-5 | 2-Methoxy-3-(1-methylpropyl)pyrazine |
| 2416-94-6 | 2,3,6-Trimethylphenol |
| 2463-53-8 | 2-Nonenal |
| 24683-00-9 | 2-Isobutyl-3 -methoxypyrazine |
| 24717-85-9 | Citronellyl 2-methylbut-2-enoate, |
| 24817-51-4 | Phenylethyl 2-methylbutyrate |
| 24851-98-7 | Methyl dihydrojasmonate |
| 2497-18-9 | 2-Hexen-1-yl acetate |
| 25152-85-6 | cis-3-Hexenyl benzoate |
| 25524-95-2 | 5-Hydroxy-7-decenoic acid delta-lactone |
| 2593-35-2 | Benzoin gum, Sumatra |
| 2785-89-9 | 4-Ethylguaiacol |
| 27939-60-2 | (2,4) and (3,5) and (3,6)-Dimethyl-3-cyclohexenylcarbaldehyde |
| 29214-60-6 | Ethyl 2-acetyloctanoate |
| 29350-73-0; 523-47-7 | Cadinene (mixture of isomers) |
| 29548-30-9 | 3,7,11-Trimethyldodeca-2,6,10-trienyl acetate |
| 29895-73-6 | Phenylacetaldehyde glyceryl acetal |
| 299-35-2 | Methyl N-acetylanthranilate |
| 301-00-8, 112-63-0 | Methyl linoleate & Methyl linolenate (mixture) |
| 30390-50-2 | 4-Decenal |
| 30640-46-1; 1888-90-0 | Mixture of Methyl cyclohexadiene and Methylene cyclohexene |
| 3142-72-1 | 2-Methyl-2-pentenoic acid |
| 3208-40-0 | 2-(3-Phenylpropyl)tetrahydrofuran |
| 326-61-4 | Piperonyl acetate |
| 32764-98-0 | 8-Decen-5-olide |
| 33467-74-2 | *cis*-3 -Hexenyl propionate |
| 3391-86-4 | 1-Octen-3-ol |
| 3452-97-9 | 3,5,5-Trimethyl-1-hexanol |
| 35044-68-9; 23726-92-3; 23726-91-2 | 4-[(2,6,6)-Trimethyl cyclohex-1-enyl) but-2-en-4one |
| 3558-60-9 | Methyl phenethyl ether |
| 360676-70-1; 2216-45-7; 17373-93-2 | Methylbenzyl acetate (mixed o,m,p) |
| 36267-71-7 | 5,7-Dihydro-2-methylthieno(3,4-d)pyrimidine |
| 36431-72-8 | Theaspirane |
| 3658-77-3 | 4-Hydroxy-2,5-dimethyl-3(2H)-furanone |
| 3681-71-8 | *cis*-3-Hexen-1-yl acetate |
| 3738-00-9 | 1,5,5,9-Tetramethyl-13-oxatricyclo(8.3.0.0(4,9))tridecane |
| 37526-88-8 | Benzyl trans-2-methyl-2-butenoate |
| 3777-69-3 | 2-Pentylfuran |
| 38462-22-5 | p-Mentha-8-thiol-3 -one |
| 3848-24-6 | 2,3-Hexanedione |
| 39255-32-8 | Ethyl 2-methylpentanoate |
| 39770-05-3 | 9-Decenal |
| 41519-23-7 | *cis*-3-Hexenyl isobutyrate |
| 4180-23-8 | trans-Anethole |
| 43052-87-5 | alpha-Damascone |
| 431-03-8 | Diacetyl |
| 432-25-7 | 2,6,6- Trimethyl-1&2-cyclohexen-1-carboxaldehyde |
| 4395 -92-0 | p-Isopropylphenylacetaldehyde, |
| 459-80-3 | Geranic acid |
| 4602-84-0 | Farnesol |
| 464-49-3 | d-Camphor |
| 4674-50-4 | Nootkatone |
| 4695-62-9 | d-Fenchone |
| 470-67-7 | 1,4-Cineole |
| 470-82-6 | Eucalyptol |
| 472-66-2 | 2,6,6-Trimethyl-1-cyclohexen-1-acetaldehyde |
| 4748-78-1 | 4-Ethylbenzaldehyde |
| 4826-62-4 | 2-Dodecenal |
| 488-10-8, 6261-18-3 | 3-Methyl-2-(2-pentenyl)-2-cyclopenten-1-one |
| 490-03-9 | (+/-) 2-Hydroxypiperitone |
| 491-07-6 | d,1- Isomenthone |
| 4940-11-8 | Ethyl maltol |
| 495-62-5 | Bisabolene |
| 501-52-0 | 3-Phenylpropionic acid |
| 502-47-6 | 3,7-Dimethyl-6-octenoic acid |
| 503-74-2 | Isovaleric acid |
| 507-70-0 | Borneol |
| 513-86-0 | Acetoin |
| 515-03-7 | (-)-Sclareol |
| 527-60-6 | 2,4,6-Trimethylphenol |
| 5320-75-2 | Cinnamyl benzoate |
| 536-59-4 | *p*-Mentha-1,8-dien-7-ol |
| 536-60-7 | p-Isopropylbenzyl alcohol |
| 5392-40-5 | Citral |
| 539-88-8 | Ethyl levulinate |
| 539-90-2 | Isobutyl butyrate |
| 540-07-8 | Amyl hexanoate |
| 540-18-1 | Amyl butyrate |
| 5405-41-4 | Ethyl 3-hydroxybutyrate |
| 541-47-9 | 3-Methylcrotonic acid |
| 541-91-3 | 3 -Methyl -1 -cyclopentadecanone |
| 543-49-7 | 2-Heptanol |
| 544-40-1 | Butyl sulfide |
| 55066-56-3 | p-Tolyl 3-methylbutyrate |
| 55418-52-5 | 4-(3,4-Methylenedioxyphenyl)-2-butanone |
| 556-82-1 | 3-Methyl-2-buten-1-ol |
| 55719-85-2 | Phenethyl tiglate |
| 5579-78-2 | *epsilon*-Decalactone |
| 56011-02-0 | Isoamyl phenethyl ether |
| 562-74-3 | 4-Carvomenthenol |
| 564-20-5 | Sclareolide |
| 564-94-3 | 2-Formyl-6,6-dimethylbicyclo(3.1.1.)hept-2-ene |
| 5655-61-8 | *l*-Bornyl acetate |
| 57-10-3 | Palmitic acid |
| 57-11-4 | Stearic acid |
| 57-55-6 | Propylene glycol |
| 576-26-1 | 2,6-Xylenol |
| 5837-78-5 | Ethyl tiglate |
| 589-59-3 | 2-Methylpropyl 3-methylbutyrate |
| 589-66-2 | Isobutyl 2-butenoate |
| 590-86-3 | 3 -Methylbutyraldehyde |
| 593-08-8 | 2-Tridecanone |
| 59558-23-5 | p-Tolyl octanoate |
| 5988-91-0 | 3,7-Dimethyloctanal |
| 5989-27-5 | d-Limonene |
| 60047-17-8, 5989-33-3, 34995-77-2 | Linalool oxide |
| 60-12-8 | Phenethyl alcohol |
| 60-33-3 | Linoleic Acid |
| 606-45-1 | Methyl o-methoxybenzoate |
| 621-82-9; 140-10-3 | Cinnamic acid |
| 623-42-7 | Methyl butyrate |
| 624-41-9 | 2-Methylbutyl acetate |
| 628-97-7 | Ethyl palmitate |
| 6290-17-1 | Ethyl 2,4-dimethyl-1,3-dioxolane-2-acetate |
| 6290-37-5 | Phenethyl hexanoate |
| 63449-68-3 | beta-Naphthyl anthranilate |
| 638-49-3 | Amyl formate |
| 6413-10-1 | Ethyl acetoacetate ethyleneglycol ketal |
| 64275-73-6 | *cis*-5-Octen-1-ol |
| 644-35-9 | o-Propylphenol |
| 645-13-6 | p-Isopropylacetophenone |
| 645-56-7 | p-Propylphenol |
| 65416-14-0 | Maltyl isobutyrate |
| 65620-50-0 | 6-Hydroxydihydrotheaspirane |
| 65-85-0 | Benzoic acid |
| 659-70-1 | Isoamyl isovalerate |
| 67028-40-4 | Ethyl (p-tolyloxy)acetate |
| 67-63-0 | Isopropyl alcohol |
| 67634-23-5 | 2-Phenylpropanal propyleneglycol acetal |
| 67674-36-6 | 2,6-Nonadienal diethyl acetal |
| 67715-80-4 | 2-Methyl-4-propyl-1,3-oxathiane |
| 67801-20-1 | 3-Methyl-5-(2,2,3-trimethylcyclopent-3-en-1-yl)pent-4-en-2-ol |
| 67801-45-0 | *trans-3* -Heptenyl 2-methylpropanoate |
| 67883-79-8 | *cis*-3-Hexenyl tiglate |
| 6789-88-4 | Hexyl benzoate |
| 68398-18-5 | (+/-) 2,8-Epithio-cis-p-menthane |
| 68606-81-5 | Currant buds black absolute (*Ribes nigrum* L.) |
| 68606-83-7 | Cananga oil |
| 68648-39-5 | Oils, lemon, terpene-free |
| 68917-18-0 | Cornmint Oil |
| 68917-52-2 | Schinus molle oil (*Schinus molle* L.) |
| 68917-75-9 | Wintergreen oil (*Gaultheria procumbens* L.) |
| 68952-43-2 | Oils, star anise |
| 689-67-8 | 6,10-Dimethyl-5,9-undecadien-2-one |
| 692-86-4 | Ethyl 10-undecenoate |
| 698-10-2 | 5-Ethyl-3-hydroxy-4-methyl-2(5H)-furanone |
| 698-76-0 | *delta*-Octalactone |
| 7011-83-8 | *gamma*-Methyldecalactone |
| 705-73-7 | alpha-Propylphenethyl alcohol |
| 70851-61-5 | 4-Hydroxy-4-methyl-7-cis-decenoic acid gamma lactone |
| 71159-90-5 | 1 -p-Menthene-8-thiol |
| 713-95-1 | *delta*-Dodecalactone |
| 71-41-0 | Amyl alcohol |
| 7452-79-1 | Ethyl 2-methylbutyrate |
| 7492-44-6 | alpha-Butylcinnamaldehyde |
| 7492-67-3 | Citronelloxyacetaldehyde |
| 7492-70-8 | Butyl butyryllactate |
| 7493-57-4 | Propyl phenethyl acetal |
| 7493-74-5 | Allyl phenoxyacetate |
| 75-18-3 | Methyl sulfide |
| 7549-33-9 | Anisyl propionate |
| 7549-37-3 | Citral dimethyl acetal |
| 76-49-3 | Bornyl acetate |
| 77-53-2 | (+)-Cedrol |
| 7779-23-9 | Linalyl hexanoate |
| 7779-50-2, 28645-51-4, 123-69-3 | *omega*-6-Hexadecenlactone |
| 7779-65-9 | Isoamyl cinnamate |
| 7779-78-4 | alpha-Isobutylphenethyl alcohol |
| 7779-81-9 | Isobutyl angelate |
| 77-83-8 | Ethyl methylphenylglycidate |
| 7785-33-3 | Geranyl tiglate |
| 7786-29-0 | 2-Methyloctanal |
| 7786-44-9 | 2,6-Nonadien-1-ol |
| 7786-61-0 | 2-Methoxy-4-vinylphenol |
| 78-35-3 | Linalyl isobutyrate |
| 78-37-5 | Linalyl cinnamate |
| 78-70-6 | Linalool |
| 78-84-2 | Isobutyraldehyde |
| 79-09-4 | Propionic acid |
| 79-31-2 | Isobutyric acid |
| 79-69-6 | alpha-Irone |
| 79-76-5 | gamma-Ionone |
| 79-89-0 | beta-Isomethylionone |
| 79-92-5 | Camphene |
| 8000-25-7 | Oils, rosemary |
| 8000-26-8 | Pine needle oil |
| 8000-28-0 | Oils, lavender |
| 8000-29-1 | Oil of Citronella, *Cymbopogon nardus* (1.) Rendle (Sri Lanka type) |
| 8000-29-1 | Oil of citronella, *Cymbopogon winterianus* Jowitt (Java type) |
| 8000-46-2 | Oils, geranium |
| 8000-48-4 | Eucalyptus oil |
| 8000-66-6 | Cardamom seed oil (Elettaria cardamomum (L.) Maton) |
| 8002-68-4 | Juniper oil (*Juniperus communis* L.) |
| 8002-73-1 | Orris absolute (*Iris pallida*) |
| 8006-64-2 | Turpentine, oil |
| 8006-77-7 | Allspice oil (*Pimenta officinalis* Lindl.) |
| 8006-82-4 | Pepper, black, oil (*Piper nigrum* L.) |
| 8006-83-5 | Hyssop oil (Hyssopus officinalis L.) |
| 8006-84-6 | Fennel oil bitter (Foeniculum vulgare Miller) |
| 8006-90-4 | Oils, peppermint |
| 8007-00-9 | Balsam oil, Peru (*Myroxylon pereirae* Klotzsch) |
| 8007-01-0 | Rose absolute (*Rosa* spp.) |
| 8007-11-2 | Origanum oil, Spanish |
| 8007-35-0 | Terpinyl acetate |
| 8007-46-3 | Oils, thyme |
| 8007-70-3 | Oil of anise |
| 8007-75-8 | Oil of bergamot |
| 8007-80-5 | Cassia bark oil |
| 8008-51-3 | Oil of camphor |
| 8008-52-4 | Coriander oil (*Coriandrum sativum* L.) |
| 8008-57-9 | Oil of orange |
| 8008-80-8 | Oils, spruce |
| 8008-98-8 | Cajeput oil (Melaleuca leucadendron L.) |
| 8014-19-5 | Oils, palmarosa |
| 8014-29-7 | Rue oil (Ruta graveolens L.) |
| 8015-77-8 | Bois de rose oil |
| 8015-92-7 | Chamomile flower, Roman, oil (Anthemis nobilis L.) |
| 8016-21-5 | Cognac oil, green |
| 8016-31-7 | Lovage oil (Levisticum officinale Koch) |
| 8016-38-4 | Neroli bigarde oil (*Citrus aurantium* L.) |
| 8016-44-2 | Petitgrain Paraguay oil |
| 8016-63-5 | Clary oil (Salvia sclarea L.) |
| 8016-78-2 | Sandalwood yellow oil (*Santalum album* L.) |
| 8016-78-2 | Spike lavender oil (*Lavandula spp*.) |
| 8016-84-0 | Tagetes oil (*Tagetes erecta* L.) |
| 8021-29-2 | Oils, Fir |
| 8022-56-8 | Oils, sage (Spanish) |
| 8022-96-6 | Jasmine oil (*Jasminum grandiflorum* L.) |
| 8023-95-8 | Helichrysum leaf oil (*Helichrysum angustifolium*) |
| 8023-99-2 | Pine scotch oil (*Pinus sylvestris* L.) |
| 8024-05-3 | Tuberose oil (Polianthes tuberosa L.) |
| 80-27-3 | Terpinyl propionate |
| 8030-28-2 | Orange flower water absolute |
| 8046-19-3 | Storax (*Liquidambar* spp.) |
| 80-56-8 | alpha-Pinene |
| 80-59-1 | *trans*-2-Methyl-2-butenoic acid |
| 80-71-7 | Methylcyclopentenolone |
| 821-55-6 | 2-Nonanone |
| 83-34-1 | Skatole |
| 84082-70-2 | Peppermint (*Mentha piperita*) ext. |
| 84649-98-9 | Cinnamon leaf oil |
| 84650-63-5 | Vanilla extract (*Vanilla* spp.) |
| 84929-51-1 | Thyme (*Thymus vulgaris*) oil |
| 84961-50-2 | Cloves (*Eugenia* spp.) |
| 85940-32-5 | Cardamom (Elettaria cardamomum (L.) Maton) |
| 868-57-5 | Methyl 2-methylbutyrate |
| 87-19-4 | Isobutyl salicylate |
| 87-20-7 | Isoamyl salicylate |
| 87-22-9 | Phenethyl salicylate |
| 87-25-2 | Ethyl anthranilate |
| 87-44-5 | beta-Caryophyllene |
| 87-91-2 | Diethyl tartrate |
| 88-69-7 | 2-Isopropylphenol |
| 88-84-6 | Guaiene |
| 89-79-2 | Isopulegol |
| 89-83-8 | Thymol |
| 9000-64-0 | Tolu, balsam, gum (*Myroxylon* spp.) |
| 90-02-8 | Salicylaldehyde |
| 90-05-1 | Guaiacol |
| 90-12-0 | 1-Methylnaphthalene |
| 90147-36-7 | Violet leaves absolute (*Viola odorata* L.) |
| 91-10-1 | 2,6-Dimethoxyphenol |
| 91-16-7 | 1,2-Dimethoxybenzene |
| 91-62-3 | 6-Methylquinoline |
| 92-52-4 | Biphenyl |
| 928-96-1 | 3-Hexen-1-ol |
| 93-04-9 | beta-Naphthyl methyl ether |
| 93-08-3 | Methyl beta-naphthyl ketone |
| 93-16-3 | Isoeugenyl methyl ether |
| 93-18-5 | beta-Naphthyl ethyl ether |
| 93-28-7 | Eugenyl acetate |
| 93-29-8 | Isoeugenyl acetate |
| 93-51-6 | 2-Methoxy-4-methylphenol |
| 94-02-0 | Ethyl benzoylacetate |
| 94087-83-9 | 4-Methoxy-2-methyl-2-butanethiol |
| 94167-14-3 | *Vanilla tahitensis*, ext. |
| 94266-47-4 | *Citrus,* ext. |
| 94-46-2 | Isoamyl benzoate |
| 94-48-4 | Geranyl benzoate |
| 94-86-0 | Propenylguaethol |
| 95-16-9 | Benzothiazole |
| 95-65-8 | 3,4-Xylenol |
| 95-87-4 | 2,5-Xylenol |
| 96-48-0 | 4-Hydroxybutanoic acid lactone |
| 97-42-7 | Carvyl acetate |
| 97-53-0 | Eugenol |
| 97-54-1 | Isoeugenol |
| 97-64-3 | Ethyl lactate |
| 97-89-2 | Citronellyl isobutyrate |
| 98-01-1 | Furfural |
| 98-02-2 | Furfuryl mercaptan |
| 99-72-9 | 2-(p-Tolyl)propionaldehyde |
| 997-29-7 | Valencene |
| 99-83-2 | alpha-Phellandrene |
| 99-86-5 | p-Mentha-1,3-diene |

### Optional ingredients:

### Additional surfactant

The sanitizing liquid composition may comprise additional surfactants. Preferred additional surfactants are 2-ethyl-hexanol EO-PO surfactants (CAS number 64366-70-7) such as Ecosurf^{™} EH3, EH6, EH9 and EH14 (DOW); Seed oil alcohol ethoxylate-propoxylate surfactants (CAS numbers 68937-66-6 and 69227-22-1) such as Ecosurf^{™} SA-4, Ecosurf^{™} SA-7, Ecosurf^{™} SA-9, and Ecosurf^{™} SA-15 (DOW); Linear and branched secondary alcohol ethoxylate surfactants (CAS numbers 84133-50-6, 60828-78-6) such as the Tergitol^{™} 15-S series, Triton HW-100, Tergitol^{™} TMN-3, Tergitol^{™} TMN-6, Tergitol^{™} TMN-10 and Tergitol^{™} TMN-100X (DOW); primary alcohol ethoxylates (CAS numbers 66455014-9, 68131-39-5, 68551-12-2, 68439-46-3) such as Tergitol^{™} 23-6.5, Tergitol^{™} 25-7, Tergitol^{™} 26-7 and Tergitol^{™} 91-6 (DOW); ethoxylate-propoxylate non-ionic low foam surfactants (CAS numbers 9003-11-6, 68439-51-0, 9038-95-3, and 68603-25-8) such as the surfactants commercialized by DOW under the commercial names: Tergitol^{™} L-61, Tergitol^{™} L-62, Tergitol^{™} L-64, Tergitol^{™} L-81, Tergitol^{™} L-101, Tergitol^{™} MinFoam, Tergitol^{™} XD, Tergitol^{™} XH, Tergitol^{™} XJ, and Triton DF-16; C10-C18-Alkyl dimethyl amine oxides (CAS reg. numbers 1643-20-5, 2571-88-2, 2605-79-0, 3332-27-2, 61788-90-7, 68955-55-5, 70592-80-2, 7128-91-8, 85408-48-6, and 85408-49-7); D-Glucopyranose, oligomeric, decyl octyl glycosides (CAS reg. number 68515-73-1) and mixtures thereof.

When present in the fragranced antimicrobial ready to use composition the concentration of the C10-C18 alkyl dimethyl amine oxide surfactant does not exceed 1350 ppm.

Most preferred additional surfactants are selected from the group consisting of: 2-ethyl-hexanol EO-PO surfactants, linear and branched secondary alcohol ethoxylate surfactants, primary alcohol ethoxylates, alkyl dimethyl amine oxide, decyl-octyl glycosides and mixture thereof.

When present in a ready to use fragranced sanitizing liquid composition the concentration of the additional surfactants is from 0.01% to 2%, more preferably from 0.02% to 1.5%, even more preferably from 0.025% to 1% by weight of the composition.

### Complexing or Chelating Agent

The fragranced sanitizing composition may comprise a complexing or chelating agent. Without wishing to be bound by the theory, it is known that complexing or chelating agents may enhance the susceptibility of gram- bacteria to antimicrobial actives by enhancing the permeability of their outer membrane to those actives. In addition, complexing agents may decrease the amount of free hardness in the water used in the method of the present invention. Anionic alkyl sulphate and alkyl benzene sulphonate surfactants are more effective at low water hardness as they tend to precipitate as calcium soaps in high hardness environments.

Preferred complexing agent is ethylenediaminetetraacetic acid (EDTA), tetrasodium salt (CAS reg. number 64-02-8). When present in a ready to use sanitizing liquid composition, the concentration of the chelating agent is 0.02%-1%.

### Hydrotrope

The composition may also contain hydrotropes to enhance the solubility of sparingly soluble organic molecules and increase the stability of the composition. Particularly preferred hydrotrope is xylenesulfonic acid sodium salt (CAS reg. number 1300-72-7), when present in a ready to use sanitizing liquid composition de concentration does not exceed 500 ppm.

### Solvent System

The present compositions may comprise a solvent system for example comprising water alone or mixtures of organic solvents. Organic solvents help to incorporate sparingly water soluble organic molecules in the composition, and also enhance the grease cleaning ability of the composition. Preferred organic solvents include the solvents shown in the table below and mixtures thereof

| **Solvent** | **CAS registry number** |
|---|---|
| Ethylene glycol monobutyl ether | 111-76-2 |
| Diethylene glycol ethyl ether | 111-90-0 |
| Ethanol | 64-15-5 |
| Isoamyl alcohol | 123-51-3 |
| Isopropyl-3 -hydroxybutyrate | 54074-94-1 |
| d-limonene | 5989-27-5 |
| n-Butyl benzoate | 136-60-7 |
| n-Butyl-3 -hydroxybutyrate | 53605-94-0 |
| Di-n-butyl carbonate | 542-52-9 |
| Dipropylene glycol | 25265-71-8 |
| 2-Methyl-1,3 propanediol | 2163-42-0 |
| 1,3-Propanediol | 504-63-2 |
| Propylene glycol | 57-55-6 |
| Lactic acid, n-butyl ester | 138-22-7 |
| Lactic acid, ethyl ester | 97-64-3 |

Preferred solvents are ethylene glycol monobutyl ether, diethylene glycolethyl ether, ethanol, dipropylene glycol, 1,3-propanediol, propylene glycol and mixtures thereof.

When present in the ready to use sanitizing liquid composition the concentration of isoamyl alcohol does not exceed 100 ppm, when present in the ready to use sanitizing liquid composition the concentration of d-limonene does not exceed 100 ppm, when present in the ready to use sanitizing liquid composition the concentration of n-butyl benzoate does not exceed 15000 ppm, when present in the ready to use sanitizing liquid composition the concentration of Di-n-butyl carbonate does not exceed 15000 ppm.

Solvent systems are more typically present at levels in the range of from about 0.1% to about 98%, preferably at least about 1% to about 95%, more usually from about 10% to about 90% by weight of the liquid composition.

### pH Modifying Agents

pH modifiers may be incorporated to generate the desired pH.

The pH of the sanitizing liquid composition is preferably below 4.5, more preferably below 4, even more preferably between 2.3 and 3.5 as measured at 20°C. Alkali or acid known to those skilled in the art may be added, for example, sodium or potassium hydroxide, carbonate, or acids such as hydrochloric acid. Those pH modifiers which add buffering capacity may be particularly preferred.

### Other antimicrobial compounds:

The fragranced sanitizing liquid composition may optionally comprise additional antimicrobial compounds selected from the group of compounds registered as antimicrobial actives under EPA CFR 180.940, CFR 180.950 or CFR 180.960. Preferred additional antimicrobial actives are hydrogen peroxide (CAS reg. number 7722-84-1), 2-phenylphenol (CAS reg. number 90-43-7), 2-benzyl-4-chlorophenol (CAS reg. number 120-32-1), copper sulphate pentahydrate (CAS reg. number 7758-99-8) and mixtures thereof.

The composition is substantially free of quaternary ammonium antimicrobial compounds. When present in a ready to use fragranced sanitizing liquid composition the concentration of hydrogen peroxide does not exceed 1100 ppm, when present in a ready to use fragranced sanitizing liquid composition the concentration of 2-phenylphenol does not exceed 400 ppm, when present in a ready to use fragranced sanitizing liquid composition the concentration of 2-benzyl-4-chlorophenol does not exceed 320 ppm, when present in a ready to use fragranced sanitizing liquid composition the concentration of copper sulphate pentahydrate does not exceed 80 ppm.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A fragranced liquid composition for treating inanimate surfaces which contact food, the composition comprising:
(a) from about 0.01% to about 10% by weight of the composition of an organic acid selected from the group consisting of acetic acid, decanoic acid, hexanoic acid, lactic acid, lauric acid, nonanoic acid, propionic acid, benzoic acid, methane sulfonic acid, octanoic acid, citric acid and its salts, fumaric acid, sorbic acid and mixtures thereof;
(b) from about 0.02% to about 10% by weight of the composition of an anionic surfactant selected from the group consisting of alkyl sulphate, alkyl alkoxylated sulphate, alkyl benzene sulphonic acid, alkyl benzene sulphonate, sarcosinate, sulphosuccinate and mixtures thereof;
(c) a fragrance wherein at least 90% by weight of the fragrance comprises fragrance components selected from Table 1 and/or Table 2;
**Table 1**
| **CAS Number** | **I Chemical Name** | **I OtherName** |
|---|---|---|
| Aliphatic, linear alpha, beta-unstaurated aldehydes, acids, and related alcohols | | |
| 3913-71-1 | I 2-Decenal | I 2-Decenal |
| 6728-26-3 | Hexen-2-al | 2-Hexenal, (2E)- |
| 111-79-5 | Methyl 2-nonenoate | 2-Nonenoic acid, methyl ester |
| 111-80-8 | Methyl 2-nonynoate | 2-Nonenoic acid, methyl ester |
| 111-12-6 | Methyl 2-octynoate | |
| Aliphatic acyclic acetals | | |
| 28069-74-1 | Acetaldehyde ethyl cis-3-hexenyl acetal | 3-Hexene, 1-(1-ethoxyethoxy)-, (3Z)- |
| 7492-66-2 | **1,** 1-diethoxy-3, 7-dimethylocta-2,6-diene | 2,6-Octadiene, **1,** 1-diethoxy-3,7-dimethyl- |
| 10022-28-3 | Octanal dimethyl acetal | Octane, 1,1-dimethoxy- |
| Aliphatic acyclic and alicyclic terpenoid tertiary alcohols and structurally related substances | | |
| 151-05-3 | Alpha, alpha- | Benzeneethanol, .alpha.,.alpha.-dimethyl-, |
| | Dimethylphenethy1 acetate | acetate |
| 10094-34-5 | Alpha, alpha-Dimethylphenethy 1 butyrate | Butanoic acid, 1,1-dimethyl-2-phenylethyl ester |
| 78-70-6 | Linalool | 1,6-Octadien-3-ol, 3,7-dimethyl- |
| 115-95-7 | Linalyl acetate | 1,6-Octadien-3-ol, 3,7-dimethyl-, acetate |
| 7212-44-4 | Nerolidol (isomer unspecified) | 1,6,10-Dodecatrien-3-ol, 3,7,11-trimethyl- |
| 98-55-5 | Alpha-Terpineol | 3 -Cyclohexene-a-methanol, .alpha.,.alpha.,4-trim ethyl- |
| 8007-35-0 | Terpinyl acetate (Isomer mixture) | Terpineol, acetate |
| 78-69-3 | Tetrahydrolinalool | 3-Octanol, 3,7-dimethy1- |
| Aliphatic acyclic diols, triols, and related agents | | |
| 102-76-1 | (tri-)Acetin | 1,2,3-Propanetriol, triacetate |
| Aliphatic and alicyclic hydrocarbons | | |
| 87-44-5 | Beta-Caryophy llene | Bicyclo[7.2.0]undec-4-ene,4,l **l,l** l-trimethyl-8- methylene-, (1R,4E,9S)- |
| 98-85-4 | p-Mentha-1,4-diene | 1,4-Cyclohexadiene, 1-methyl-4-(1-methylethyl)- |
| 80-56-8 | Alpha-Pinene | Bicyclo[3 **.1.1**]hept-2-ene,2,6,6-trimethyl- |
| 127-91-3 | Beta-Pinene | Bicyclo[3 **.1.1**]hept-2-ene, 2,6,6-trimethyl- |
| 586-62-9 | Terpinolene | Cyclohexene, 1-methyl-4-(1-methylethylidene)- |
| Aliphatic and aromatic ethers | | |
| 101-84-8 | Diphenyl ether | Benzene, 1,1'-oxybis- |
| 470-82-6 | Eucalyptol | 2-Oxabicyclo[2.2.2]octane, 1,3,3-trimethyl- |
| 104-98-8 | p-Methylanisole | Benzene, 1-methoxy-4-methy1- |
| 16409-43-1 | Tetrahydro-4-methyl-2-(2-methylpropen-1-y | 2H-Pyran, tetrahydro-4-methy 1 -2-(2-methy 1-1-propeny1)- |
| | l)pyran | |
| Aliphatic branched-chain unsaturated alcohols, aldehydes, acids, and related esters | | |
| 106-23-0 | Citronellal | 6-Octenal, 3,7-dimethyl- |
| 106-25-2 | Nerol | 2,6-Octadien-1-ol, 3,7-dimethyl-, (2Z)- |
| Aliphatic di-and trienals and related alcohols, acids, and esters | | |
| 3025-30-7 | Ethyl (2E,4Z)-2,4-decadienoate | 2,4-Decadienoic acid, ethyl ester, (2E,4Z)- |
| 557-48-2 | Nona-2-trans-6-cis-dienal | 2,6-Nonadienal, (2E,6Z)- |
| Aliphatic lactones | | |
| 706-14-9 | gamrna-Decalactone | 2(3H)-Furanone, 5-hexvldihydro- |
| 105-21-5 | gamrna-Heptalactone | 2(3H)-Furanone, dihydro-5-propyl- |
| 695-06-7 | gamma- Hexalactone | (3H)-Furanone, 5-ethyldihydro- |
| 3301-94-8 | Hydroxynonanoic acid, delta lactone | |
| 710-04-3 | 5-Hydroxyundecanoic acid lactone | 2H-Pyran-2-one, 6-hexyltetrahydro- |
| 28645-51-4 | Oxacycloheptadec-10-ene-2-one | Oxacycloheptadec-10-en-2-one |
| 104-61-0 | gamrna-Nonalactone | 2(3H)-Furanone, dihydro-5-pentyl- |
| 104-50-7 | gamrna-Octalactone | 2(3H)-Furanone, 5-butyldihydro- |
| 106-02-5 | omega-Pentadecalactone | Oxacyclohexadecan-2-one |
| 104-67-6 | gamma-Undecalactone | 2(3H)-Furanone, 5-heptyldihydro- |
| Aliphatic secondary alcohols, ketones and related esters and acetals | | |
| 81925-81-7 | 5-Methyl-2-hepten-4-one | |
| 110-93-0 | 6-Methyl-5-hepten-2-one | 5-Hepten-2-one, 6-methyl- |
| Ally1 esters | | |
| 123-68-2 | Ally hexanoate | Hexanoic acid, 2-propenyl ester |
| Alphatic primary alcohols, aldehydes, carboxylic acids, acetals and esters | | |
| 105-53-3 | Diethyl rnalonate | Propanedioic acid, diethyl ester |
| 141-97-9 | Ethyl acetoacetate | Butanoic acid, 3-oxo-, ethyl ester |
| 105-95-3 | Ethylene brassylate | 1,4-Dioxacycloheptadecane-5,17-dione |
| 107-75-5 | Hydroxycitronellal | Octanal, 7-hydroxy-3,7-dimethyl- |
| 107-74-4 | Hydroxycitronellol | 1,7-Octanediol, 3,7-dimethyl- |
| 705-86-2 | delta-Decalactone | 2H-Pvran-2-one, tetrahydro-6-pentv1- |
| 77-93-0 | Triethylcitrate | 1,2,3-Propanetricarboxylic acid, 2-hydroxy-, triethyl ester |
| Anthranilate derivatives | | |
| 134-20-3 | Methyl anthranilate | Benzoic acid, 2-amino-, methyl ester |
| 85-91-6 | Methyl N-methylanthranilate | Benzoic acid, 2-(methylamino)-, methyl ester |
| Aromatic hydrocarbons | | |
| 99-87-6 | p-Cymene | Benzene, 1-methyl-4-(1-methylethyl)- |
| Aromatic substituted secondary alcohols, ketones, and related ester | | |
| 98-86-2 | Acetophenone | Ethanone, 1-phenyl- |
| 122-00-9 | 4' -Methylacetophenone | Ethanone, 1(4-methylpheny1)- |
| 93-92-5 | alpha-Methylbenzvl acetate | Benzenemethanol, alpha.-methyl-, acetate |
| 98-85-1 | alpha-Methylbenzyl alcohol | Benzenemethanol, alpha.-methyl- |
| 93-08-3 | Methyl beta-naphthyl ketone | Ethanone, 1-(2-naphthaleny1)- |
| Benzyl derivatives | | |
| 100-52-7 | Benzaldehyde | Benzaldehyde |
| 140-11-4 | Benzvl acetate | Acetic acid, phenylmethyl ester |
| 100-51-6 | Benzyl alcohol | Benzenemethanol |
| 103-37-7 | Benzyl butyrate | Butanoic acid, phenylmethyl ester |
| 103-28-6 | Benzyl isobutyrate | Propanoic acid, 2-methyl-, phenylmethyl ester |
| 122-63-4 | Benzvl propionate | Propanoic acid, phenylmethyl ester |
| 122-03-2 | Curninaldehyde | Benzaldehyde, 4-(1-methylethy1)- |
| 93-89-0 | Ethyl benzoate | Benzoic acid, ethyl ester |
| 93-58-3 | Methyl benzoate | Benzoic acid, methyl ester |
| Carvone and structurally related substances | | |
| 20777-49-5 | Dihydrocarvvl acetate | |
| Cinnamy 1 derivatives | | |
| 104-55-2 | Cinnarnaldehyde | 2 Propenal, 3-phenyl- |
| 104-54-1 | Cinnamyl alcohol | 2-Propen-1-ol, 3-phenyl- |
| 101-86-0 | alpha-Hexy lcinnarnaldehyde | Octanal, 2-(pheny lmethylene)- |
| 101-39-3 | alpha-Methy lcinnamaldehyde | 2-Propenal, 2-methyl-3-phenyl- |
| 103-26-4 | Methyl cinnarnate | 2 Propenoic acid, 3-phenyl-, methyl ester |
| 122-97-4 | 3-Phenyl 1-propanol | Benzenepropanol |
| Esters of aliphatic acyclic primary alcohols with aliphatic linear saturated carboxylie acids | | |
| 16491-36-4 | cis-3-Hexenyl butyrate | Butanoic acid, (3Z)-3-hexenyl ester |
| 31501-11-8 | cis-3-Hexenyl hexanoate | Hexanoic acid, (3Z)-3-hexenyl ester |
| 2639-63-6 | Hexy1 butyrate | Butanoic acid, hexyl ester |
| 6378-65-0 | Hexy1 hexanoate | Hexanoic acid, hexyl ester |
| 2445-76-3 | Hexyl propionate | |
| 110-19-0 | Ixobutyl acetate | |
| 112-19-6 | 10-Undecen-1-yl acetate | |
**Table 2**
| CAS Number | Chemical Name |
|---|---|
| 100-06-1 | Acetanisole |
| 10032-15-2 | Hexyl 2-methylbutanoate |
| 100-86-7 | *alpha,alpha*-Dimethylphenethyl alcohol |
| 10094-41-4 | 3-Hexenyl 2-methylbutanoate |
| 101-41-7 | Methyl phenyl acetate |
| 101-84-8 | Diphenyl ether |
| 101-86-0 | alpha-Hexylcinnamaldehyde |
| 101-94-0 | p-Tolyl phenylacetate |
| 101-97-3 | Ethyl phenylacetate |
| 102-13-6 | Isobutyl phenylacetate |
| 102-16-9 | Benzyl phenylacetate |
| 102-19-2 | Isoamyl phenylacetate |
| 102-22-7 | Geranyl phenylacetate |
| 103-07-1 | 2-Methyl-4-phenyl-2-butyl acetate |
| 103-36-6 | Ethyl cinnamate |
| 103-38-8 | Benzyl isovalerate |
| 103-41-3 | Benzyl cinnamate |
| 103-52-6 | Phenethyl butyrate |
| 103-53-7 | Phenethyl cinnamate |
| 103-54-8 | Cinnamyl acetate |
| 103-56-0 | Cinnamyl propionate |
| 103-59-3 | Cinnamyl isobutyrate |
| 103-60-6 | 2-Phenoxyethyl isobutyrate |
| 103-82-2 | Phenylacetic acid |
| 103-93-5 | p-Tolyl isobutyrate |
| 104-09-6 | p-Tolylacetaldehyde |
| 104-20-1 | 4-(p-Methoxyphenyl)-2-butanone |
| 104-21-2 | Anisyl acetate |
| 104-45-0 | p-Propylanisole |
| 104-53-0 | 3-Phenylpropionaldehyde |
| 104-55-2; 14371-10-9 | Cinnamaldehyde |
| 104-57-4 | Benzyl formate |
| 10458-14-7 | Menthone |
| 104-62-1 | Phenethyl formate |
| 104-65-4 | Cinnamyl formate |
| 104-76-7 | 2-Ethyl-1-hexanol |
| 105-01-1 | Isobutyl 3-(2-furan)propionate |
| 105-37-3 | Ethyl propionate |
| 105-57-7 | Acetal |
| 105-68-0 | Isoamyl propionate |
| 105-85-1 | Citronellyl formate |
| 105-86-2 | Geranyl formate |
| 105-90-8 | Geranyl propionate |
| 106-21-8 | 3,7-Dimethyl-1-octanol |
| 106-22-9 | *dl*-Citronellol |
| 106-23-0 | Citronellal |
| 106-24-1 | Geraniol |
| 106-29-6 | Geranyl butyrate |
| 106-35-4 | 3-Heptanone |
| 106-44-5 | p-Cresol |
| 106-68-3 | 3-Octanone |
| 106-70-7 | Methyl hexanoate |
| 1076-56-8 | 1-Methyl-3-methoxy-4-isopropylbenzene |
| 107-87-9 | 2-Pentanone |
| 108-21-4 | Isopropyl acetate |
| 108-29-2 | *gamma*-Valerolactone |
| 108-50-9 | 2,6-Dimethylpyrazine |
| 108-64-5 | Ethyl isovalerate |
| 108-82-7 | 2,6-Dimethyl-4-heptanol |
| 108-83-8 | 2,6-Dimethyl-4-heptanone |
| 109-08-0 | 2-Methylpyrazine |
| 109-19-3 | Butyl isovalerate |
| 109-21-7 | Butyl butyrate |
| 109-42-2 | Butyl 10-undecenoate |
| 109-94-4 | Ethyl formate |
| 110-27-0 | Isopropyl myristate |
| 110-40-7 | Diethyl sebacate |
| 110-43-0 | 2-Heptanone |
| 11050-62-7 | Isojasmone |
| 110-93-0 | 6-Methyl-5-hepten-2-one |
| 111-11-5 | Methyl octanoate |
| 111-13-7 | 2-Octanone |
| 111-62-6 | Ethyl oleate |
| 1117-55-1 | Hexyl octanoate |
| 111-81-9 | Methyl 10-undecenoate |
| 1118-27-0 | Linalyl isovalerate |
| 112-06-1 | Heptyl acetate |
| 112-12-9 | 2-Undecanone |
| 112-14-1 | Octyl acetate |
| 112-17-4 | Decyl acetate |
| 1123-85-9 | beta-Methylphenethyl alcohol |
| 112-38-9 | 10-Undecenoic Acid |
| 112-45-8 | 10-Undecenal |
| 112-66-3 | Lauryl acetate |
| 112-80-1 | Oleic Acid |
| 1128-08-1 | 3-Methyl-2-(n-pentanyl)-2-cyclopenten-1-one |
| 1139-30-6 | beta-Caryophyllene oxide |
| 115-71-9 (α) 77-42-9 (β 11031-45-1) | Santalol |
| 115-95-7 | Linalyl acetate |
| 115-99-1 | Linalyl formate |
| 116-02-9 | 3, 5, 5-Trimethylcyclohexanol |
| 116-53-0 | 2-Methylbutyric acid |
| 118-58-1 | Benzyl salicylate |
| 118-71-8 | Maltol |
| 119-36-8 | Methyl salicylate |
| 1193-81-3 | (±)-1-Cyclohexylethanol |
| 1195-32-0 | p, alpha-Dimethyl styrene |
| 119-65-3 | Isoquinoline |
| 1197-01-9 | *p-alpha,alpha*-Trimethylbenzyl alcohol |
| 120-11-6 | Isoeugenyl benzyl ether |
| 120-45-6 | alpha-Methylbenzyl propionate |
| 120-50-3 | Isobutyl benzoate |
| 120-51-4 | Benzyl benzoate |
| 120-57-0 | Piperonal |
| 1207-44-0 | Prenyl benzoate |
| 121-32-4 | Ethyl vanillin |
| 121-33-5 | Vanillin |
| 121-39-1 | Ethyl 3-phenylglycidate |
| 121-98-2 | Methyl anisate |
| 122-40-7 | alpha-Amylcinnamaldehyde |
| 122-48-5 | Zingerone |
| 122-67-8 | Isobutyl cinnamate |
| 122-68-9 | 3-Phenylpropyl cinnamate |
| 122-69-0 | Cinnamyl cinnamate |
| 122-70-3 | Phenethyl propionate |
| 122-72-5 | 3-Phenylpropyl acetate |
| 122-78-1 | Phenyl acetal dehyde |
| 122-91-8 | Anisyl formate |
| 123-07-9 | p-Ethylphenol |
| 123-32-0 | 2,5-Dimethylpyrazine |
| 123-51-3 | Isoamyl alcohol |
| 123-68-2 | Allyl hexanoate |
| 123-76-2 | Levulinic acid |
| 123-86-4 | Butyl acetate |
| 123-92-2 | Isoamyl acetate |
| 124-06-1 | Ethyl myristate |
| 124-10-7 | Methyl myristate |
| 125037-13-0; 502-61-4 | Farnesene |
| 125-12-2 | Isobornyl acetate |
| 126-64-7 | Linalyl benzoate |
| 127-17-3 | Pyruvic acid |
| 127-41-3 | alpha-Ionone |
| 127-42-4 | Methyl-alpha-ionone |
| 127-43-5 | Methyl -b eta-i onone |
| 127-91-3 | beta-Pinene |
| 13171-00-1 | 4-Acetyl-6-t-butyl-1,1-dimethylindan |
| 1322-17-4 | 1,3-Nonanediol acetate (mixed esters) |
| 133-37-9, 87-69-4 | Tartaric acid (*d-, l-, dl-, meso*-) |
| 1334-78-7 | Tolualdehydes (mixed o,m,p) |
| 13466-78-9 | 3 -Carene |
| 13481-87-3 | Methyl 3-nonenoate |
| 13494-06-9 | 3,4- Dimethyl-1,2-cyclopentadione |
| 13532-18-8 | Methyl 3-methylthiopropionate |
| 13679-70-4 | 5-Methyl-2-thiophenecarboxyaldehyde |
| 13877 -91-3 | 3,7-Dimethyl-1,3,6-octatriene |
| 140-11-4 | Benzyl acetate |
| 140-39-6 | p-Tolyl acetate |
| 141-12-8 | Neryl acetate |
| 141-14-0 | Citronellyl propionate |
| 141-16-2 | Citronellyl butyrate |
| 141-92-4 | Hydroxycitronellal dimethyl acetal |
| 142-19-8 | Allyl heptanoate |
| 142-50-7 | Petitgrain Oil |
| 143-13-5 | Nonyl acetate |
| 143-14-6 | 9-Undecenal |
| 143-28-2 | *cis*-9-Octadecenol |
| 144-39-8 | Linalyl propionate |
| 14765-30-1 | 2-sec-Butylcyclohexanone |
| 148-05-1 | *gamma*-Dodecalactone |
| 14901-07-6; 79-77-6 | beta-lonone |
| 150-78-7 | p-Dimethoxybenzene |
| 151-10-0 | m-Dimethoxybenzene |
| 15111-96-3 | *p*-Mentha-1,8-dien-7-yl acetate |
| 151-82-4 | 3-Hexenyl formate |
| 15356-70-4, 89-78-1, 1490-04-6 | Menthol |
| 15679-13-7 | 2-Isopropyl-4-methylthiazole |
| 15706-73-7 | *n*-Butyl 2-methylbutyrate |
| 15707-23-0 | 2-Ethyl-3 -methylpyrazine |
| 1604-28-0 | 6-Methyl-3,5-heptadien-2-one |
| 1617-23-8 | Ethyl 2-methyl-3-pentenoate |
| 16356-11-9 | 1,3,5-Undecatriene |
| 16409-43-1 | Tetrahydro-4-methyl-2-(2-methylpropen-1-yl)pyran |
| 16491-24-0 | 2,4-Hexadienyl isobutyrate |
| 16510-27-3 | 1-Cyclopropanemethyl-4-methoxybenzene |
| 1786-08-9 | Nerol oxide |
| 1866-31-5 | Allyl cinnamate |
| 197098-61-6 | 8-Ocimenyl acetate |
| 198-24-2 | 1-Octen-3-yl acetate |
| 198404-98-7 | (1-Methyl-2-(1,2,2-trimethylbicyclo[3.1.0]hex-3-ylmethyl)cyclopropyl)methanol |
| 19872-52-7 | 4-Mercapto-4-methyl-2-pentanone |
| 2021-28-5 | Ethyl 3-phenylpropionate |
| 21368-68-3 | dl-Camphor |
| 2142-94-1 | Neryl formate |
| 21722-83-8 | Cyclohexaneethyl acetate |
| 2173-57-1 | beta-Naphthyl isobutyl ether |
| 21834-92-4 | 5-Methyl-2-phenyl-2-hexenal |
| 2236-90-2 | Vanilla *(Vanilla* spp.) |
| 2239-36-8 | Mace oil (*Myristica fragrans* Houtt.) |
| 2270-60-2 | Methyl 3,7-dimethyl-6-octenoate |
| 2305-21-7 | 2-Hexen-1-ol |
| 23267-57-4 | beta-Ionone epoxide |
| 2345-26-8 | Geranyl isobutyrate |
| 2408-20-0 | Allyl propionate |
| 24168-70-5 | 2-Methoxy-3-(1-methylpropyl)pyrazine |
| 2416-94-6 | 2,3,6-Trimethylphenol |
| 2463-53-8 | 2-Nonenal |
| 24683-00-9 | 2-Isobutyl-3 -methoxypyrazine |
| 24717-85-9 | Citronellyl 2-methylbut-2-enoate, |
| 24817-51-4 | Phenylethyl 2-methylbutyrate |
| 24851-98-7 | Methyl dihydrojasmonate |
| 2497-18-9 | 2-Hexen-1-yl acetate |
| 25152-85-6 | cis-3-Hexenyl benzoate |
| 25524-95-2 | 5-Hydroxy-7-decenoic acid delta-lactone |
| 2593-35-2 | Benzoin gum, Sumatra |
| 2785-89-9 | 4-Ethylguaiacol |
| 27939-60-2 | (2,4) and (3,5) and (3,6)-Dimethyl-3-cyclohexenylcarbaldehyde |
| 29214-60-6 | Ethyl 2-acetyloctanoate |
| 29350-73-0; 523-47-7 | Cadinene (mixture of isomers) |
| 29548-30-9 | 3,7,11-Trimethyldodeca-2,6,10-trienyl acetate |
| 29895-73-6 | Phenylacetaldehyde glyceryl acetal |
| 299-35-2 | Methyl N-acetylanthranilate |
| 301-00-8, 112-63-0 | Methyl linoleate & Methyl linolenate (mixture) |
| 30390-50-2 | 4-Decenal |
| 30640-46-1; 1888-90-0 | Mixture of Methyl cyclohexadiene and Methylene cyclohexene |
| 3142-72-1 | 2-Methyl-2-pentenoic acid |
| 3208-40-0 | 2-(3-Phenylpropyl)tetrahydrofuran |
| 326-61-4 | Piperonyl acetate |
| 32764-98-0 | 8-Decen-5-olide |
| 33467-74-2 | *cis*-3-Hexenyl propionate |
| 3391-86-4 | 1-Octen-3-ol |
| 3452-97-9 | 3,5,5-Trimethyl-1-hexanol |
| 35044-68-9; 23726-92-3; 23726-91-2 | 4-[(2,6,6)-Trimethyl cyclohex-1-enyl) but-2-en-4one |
| 3558-60-9 | Methyl phenethyl ether |
| 360676-70-1; 2216-45-7; 17373-93-2 | Methylbenzyl acetate (mixed o,m,p) |
| 36267-71-7 | 5,7-Dihydro-2-methylthieno(3,4-d)pyrimidine |
| 36431-72-8 | Theaspirane |
| 3658-77-3 | 4-Hydroxy-2,5-dimethyl-3(2H)-furanone |
| 3681-71-8 | *cis*-3-Hexen-1-yl acetate |
| 3738-00-9 | 1,5,5,9-Tetramethyl-13-oxatricyclo(8.3.0.0(4,9))tridecane |
| 37526-88-8 | Benzyl trans-2-methyl-2-butenoate |
| 3777-69-3 | 2-Pentylfuran |
| 38462-22-5 | p-Mentha-8-thiol-3 -one |
| 3848-24-6 | 2,3-Hexanedione |
| 39255-32-8 | Ethyl 2-methylpentanoate |
| 39770-05-3 | 9-Decenal |
| 41519-23-7 | *cis*-3-Hexenyl isobutyrate |
| 4180-23-8 | trans-Anethole |
| 43052-87-5 | alpha-Damascone |
| 431-03-8 | Diacetyl |
| 432-25-7 | 2,6,6-Trimethyl-1&2-cyclohexen-1-carboxaldehyde |
| 4395 -92-0 | p-Isopropylphenylacetaldehyde, |
| 459-80-3 | Geranic acid |
| 4602-84-0 | Farnesol |
| 464-49-3 | d-Camphor |
| 4674-50-4 | Nootkatone |
| 4695-62-9 | d-Fenchone |
| 470-67-7 | 1,4-Cineole |
| 470-82-6 | Eucalyptol |
| 472-66-2 | 2,6,6-Trimethyl-1-cyclohexen-1-acetaldehyde |
| 4748-78-1 | 4-Ethylbenzaldehyde |
| 4826-62-4 | 2-Dodecenal |
| 488-10-8, 6261-18-3 | 3-Methyl-2-(2-pentenyl)-2-cyclopenten-1-one |
| 490-03-9 | (+/-) 2-Hydroxypiperitone |
| 491-07-6 | d,l-Isomenthone |
| 4940-11-8 | Ethyl maltol |
| 495-62-5 | Bisabolene |
| 501-52-0 | 3-Phenylpropionic acid |
| 502-47-6 | 3,7-Dimethyl-6-octenoic acid |
| 503-74-2 | Isovaleric acid |
| 507-70-0 | Borneol |
| 513-86-0 | Acetoin |
| 515-03-7 | (-)-Sclareol |
| 527-60-6 | 2,4,6-Trimethylphenol |
| 5320-75-2 | Cinnamyl benzoate |
| 536-59-4 | *p*-Mentha-1,8-dien-7-ol |
| 536-60-7 | p-Isopropylbenzyl alcohol |
| 5392-40-5 | Citral |
| 539-88-8 | Ethyl levulinate |
| 539-90-2 | Isobutyl butyrate |
| 540-07-8 | Amyl hexanoate |
| 540-18-1 | Amyl butyrate |
| 5405-41-4 | Ethyl 3-hydroxybutyrate |
| 541-47-9 | 3-Methylcrotonic acid |
| 541-91-3 | 3 -Methyl -1 -cyclopentadecanone |
| 543-49-7 | 2-Heptanol |
| 544-40-1 | Butyl sulfide |
| 55066-56-3 | p-Tolyl 3-methylbutyrate |
| 55418-52-5 | 4-(3,4-Methylenedioxyphenyl)-2-butanone |
| 556-82-1 | 3-Methyl-2-buten-1-ol |
| 55719-85-2 | Phenethyl tiglate |
| 5579-78-2 | *epsilon*-Decalactone |
| 56011-02-0 | Isoamyl phenethyl ether |
| 562-74-3 | 4-Carvomenthenol |
| 564-20-5 | Sclareolide |
| 564-94-3 | 2-Formyl-6,6-dimethylbicyclo(3.1.1.)hept-2-ene |
| 5655-61-8 | *l*-Bornyl acetate |
| 57-10-3 | Palmitic acid |
| 57-11-4 | Stearic acid |
| 57-55-6 | Propylene glycol |
| 576-26-1 | 2,6-Xylenol |
| 5837-78-5 | Ethyl tiglate |
| 589-59-3 | 2-Methylpropyl 3-methylbutyrate |
| 589-66-2 | Isobutyl 2-butenoate |
| 590-86-3 | 3 -Methylbutyraldehyde |
| 593-08-8 | 2-Tridecanone |
| 59558-23-5 | p-Tolyl octanoate |
| 5988-91-0 | 3,7-Dimethyloctanal |
| 5989-27-5 | d-Limonene |
| 60047-17-8, 5989-33-3, 34995-77-2 | Linalool oxide |
| 60-12-8 | Phenethyl alcohol |
| 60-33-3 | Linoleic Acid |
| 606-45-1 | Methyl o-methoxybenzoate |
| 621-82-9; 140-10-3 | Cinnamic acid |
| 623-42-7 | Methyl butyrate |
| 624-41-9 | 2-Methylbutyl acetate |
| 628-97-7 | Ethyl palmitate |
| 6290-17-1 | Ethyl 2,4-dimethyl-1,3-dioxolane-2-acetate |
| 6290-37-5 | Phenethyl hexanoate |
| 63449-68-3 | beta-Naphthyl anthranilate |
| 638-49-3 | Amyl formate |
| 6413-10-1 | Ethyl acetoacetate ethyleneglycol ketal |
| 64275-73-6 | *cis*-5-Octen-1-ol |
| 644-35-9 | o-Propylphenol |
| 645-13-6 | p-Isopropylacetophenone |
| 645-56-7 | p-Propylphenol |
| 65416-14-0 | Maltyl isobutyrate |
| 65620-50-0 | 6-Hydroxydihydrotheaspirane |
| 65-85-0 | Benzoic acid |
| 659-70-1 | Isoamyl isovalerate |
| 67028-40-4 | Ethyl (p-tolyloxy)acetate |
| 67-63-0 | Isopropyl alcohol |
| 67634-23-5 | 2-Phenylpropanal propyleneglycol acetal |
| 67674-36-6 | 2,6-Nonadienal diethyl acetal |
| 67715-80-4 | 2-Methyl-4-propyl-1,3-oxathiane |
| 67801-20-1 | 3-Methyl-5-(2,2,3-trimethylcyclopent-3-en-1-yl)pent-4-en-2-ol |
| 67801-45-0 | *trans*-3-Heptenyl 2-methylpropanoate |
| 67883-79-8 | *cis*-3-Hexenyl tiglate |
| 6789-88-4 | Hexyl benzoate |
| 68398-18-5 | (+/-) 2,8-Epithio-cis-p-menthane |
| 68606-81-5 | Currant buds black absolute (*Ribes nigrum* L.) |
| 68606-83-7 | Cananga oil |
| 68648-39-5 | Oils, lemon, terpene-free |
| 68917-18-0 | Cornmint Oil |
| 68917-52-2 | Schinus molle oil (*Schinus molle* L.) |
| 68917-75-9 | Wintergreen oil (*Gaultheria procumbens* L.) |
| 68952-43-2 | Oils, star anise |
| 689-67-8 | 6,10-Dimethyl-5,9-undecadien-2-one |
| 692-86-4 | Ethyl 10-undecenoate |
| 698-10-2 | 5-Ethyl-3-hydroxy-4-methyl-2(5H)-furanone |
| 698-76-0 | *delta*-Octalactone |
| 7011-83-8 | *gamma*-Methyldecalactone |
| 705-73-7 | alpha-Propylphenethyl alcohol |
| 70851-61-5 | 4-Hydroxy-4-methyl-7-cis-decenoic acid gamma lactone |
| 71159-90-5 | 1-p-Menthene-8-thiol |
| 713-95-1 | *delta*-Dodecalactone |
| 71-41-0 | Amyl alcohol |
| 7452-79-1 | Ethyl 2-methylbutyrate |
| 7492-44-6 | alpha-Butylcinnamaldehyde |
| 7492-67-3 | Citronelloxyacetaldehyde |
| 7492-70-8 | Butyl butyryllactate |
| 7493-57-4 | Propyl phenethyl acetal |
| 7493-74-5 | Allyl phenoxyacetate |
| 75-18-3 | Methyl sulfide |
| 7549-33-9 | Anisyl propionate |
| 7549-37-3 | Citral dimethyl acetal |
| 76-49-3 | Bornyl acetate |
| 77-53-2 | (+)-Cedrol |
| 7779-23-9 | Linalyl hexanoate |
| 7779-50-2, 28645-51-4, 123-69-3 | *omega*-6-Hexadecenlactone |
| 7779-65-9 | Isoamyl cinnamate |
| 7779-78-4 | alpha-Isobutylphenethyl alcohol |
| 7779-81-9 | Isobutyl angelate |
| 77-83-8 | Ethyl methylphenylglycidate |
| 7785-33-3 | Geranyl tiglate |
| 7786-29-0 | 2-Methyloctanal |
| 7786-44-9 | 2,6-Nonadien-1-ol |
| 7786-61-0 | 2-Methoxy-4-vinylphenol |
| 78-35-3 | Linalyl isobutyrate |
| 78-37-5 | Linalyl cinnamate |
| 78-70-6 | Linalool |
| 78-84-2 | Isobutyraldehyde |
| 79-09-4 | Propionic acid |
| 79-31-2 | Isobutyric acid |
| 79-69-6 | alpha-Irone |
| 79-76-5 | gamma-Ionone |
| 79-89-0 | beta-Isomethylionone |
| 79-92-5 | Camphene |
| 8000-25-7 | Oils, rosemary |
| 8000-26-8 | Pine needle oil |
| 8000-28-0 | Oils, lavender |
| 8000-29-1 | Oil of Citronella, *Cymbopogon nardus* (1.) Rendle (Sri Lanka type) |
| 8000-29-1 | Oil of citronella, *Cymbopogon winterianus* Jowitt (Java type) |
| 8000-46-2 | Oils, geranium |
| 8000-48-4 | Eucalyptus oil |
| 8000-66-6 | Cardamom seed oil (Elettaria cardamomum (L.) Maton) |
| 8002-68-4 | Juniper oil (*Juniperus communis* L.) |
| 8002-73-1 | Orris absolute (*Iris pallida*) |
| 8006-64-2 | Turpentine, oil |
| 8006-77-7 | Allspice oil (*Pimenta officinalis* Lindl.) |
| 8006-82-4 | Pepper, black, oil (*Piper nigrum* L.) |
| 8006-83-5 | Hyssop oil (Hyssopus officinalis L.) |
| 8006-84-6 | Fennel oil bitter (Foeniculum vulgare Miller) |
| 8006-90-4 | Oils, peppermint |
| 8007-00-9 | Balsam oil, Peru (*Myroxylon pereirae* Klotzsch) |
| 8007-01-0 | Rose absolute (*Rosa* spp.) |
| 8007-11-2 | Origanum oil, Spanish |
| 8007-35-0 | Terpinyl acetate |
| 8007-46-3 | Oils, thyme |
| 8007-70-3 | Oil of anise |
| 8007-75-8 | Oil of bergamot |
| 8007-80-5 | Cassia bark oil |
| 8008-51-3 | Oil of camphor |
| 8008-52-4 | Coriander oil (*Coriandrum sativum* L.) |
| 8008-57-9 | Oil of orange |
| 8008-80-8 | Oils, spruce |
| 8008-98-8 | Cajeput oil (Melaleuca leucadendron L.) |
| 8014-19-5 | Oils, palmarosa |
| 8014-29-7 | Rue oil (Ruta graveolens L.) |
| 8015-77-8 | Bois de rose oil |
| 8015-92-7 | Chamomile flower, Roman, oil (Anthemis nobilis L.) |
| 8016-21-5 | Cognac oil, green |
| 8016-31-7 | Lovage oil (Levisticum officinale Koch) |
| 8016-38-4 | Neroli bigarde oil (*Citrus aurantium* L.) |
| 8016-44-2 | Petitgrain Paraguay oil |
| 8016-63-5 | Clary oil (Salvia sclarea L.) |
| 8016-78-2 | Sandalwood yellow oil (*Santalum album* L.) |
| 8016-78-2 | Spike lavender oil (*Lavandula spp*.) |
| 8016-84-0 | Tagetes oil (*Tagetes erecta* L.) |
| 8021-29-2 | Oils, Fir |
| 8022-56-8 | Oils, sage (Spanish) |
| 8022-96-6 | Jasmine oil (*Jasminum grandiflorum* L.) |
| 8023-95-8 | Helichrysum leaf oil (*Helichrysum angustifolium*) |
| 8023-99-2 | Pine scotch oil (*Pinus sylvestris* L.) |
| 8024-05-3 | Tuberose oil (Polianthes tuberosa L.) |
| 80-27-3 | Terpinyl propionate |
| 8030-28-2 | Orange flower water absolute |
| 8046-19-3 | Storax (*Liquidambar* spp.) |
| 80-56-8 | alpha-Pinene |
| 80-59-1 | *trans*-2-Methyl-2-butenoic acid |
| 80-71-7 | Methylcyclopentenolone |
| 821-55-6 | 2-Nonanone |
| 83-34-1 | Skatole |
| 84082-70-2 | Peppermint (*Mentha piperita*) ext. |
| 84649-98-9 | Cinnamon leaf oil |
| 84650-63-5 | Vanilla extract *(Vanilla* spp.) |
| 84929-51-1 | Thyme (*Thymus vulgaris*) oil |
| 84961-50-2 | Cloves (*Eugenia* spp.) |
| 85940-32-5 | Cardamom (Elettaria cardamomum (L.) Maton) |
| 868-57-5 | Methyl 2-methylbutyrate |
| 87-19-4 | Isobutyl salicylate |
| 87-20-7 | Isoamyl salicylate |
| 87-22-9 | Phenethyl salicylate |
| 87-25-2 | Ethyl anthranilate |
| 87-44-5 | beta-Caryophyllene |
| 87-91-2 | Diethyl tartrate |
| 88-69-7 | 2-Isopropylphenol |
| 88-84-6 | Guaiene |
| 89-79-2 | Isopulegol |
| 89-83-8 | Thymol |
| 9000-64-0 | Tolu, balsam, gum (*Myroxylon* spp.) |
| 90-02-8 | Salicylaldehyde |
| 90-05-1 | Guaiacol |
| 90-12-0 | 1-Methylnaphthalene |
| 90147-36-7 | Violet leaves absolute (*Viola odorata* L.) |
| 91-10-1 | 2,6-Dimethoxyphenol |
| 91-16-7 | 1,2-Dimethoxybenzene |
| 91-62-3 | 6-Methylquinoline |
| 92-52-4 | Biphenyl |
| 928-96-1 | 3-Hexen-1-ol |
| 93-04-9 | beta-Naphthyl methyl ether |
| 93-08-3 | Methyl beta-naphthyl ketone |
| 93-16-3 | Isoeugenyl methyl ether |
| 93-18-5 | beta-Naphthyl ethyl ether |
| 93-28-7 | Eugenyl acetate |
| 93-29-8 | Isoeugenyl acetate |
| 93-51-6 | 2-Methoxy-4-methylphenol |
| 94-02-0 | Ethyl benzoylacetate |
| 94087-83-9 | 4-Methoxy-2-methyl-2-butanethiol |
| 94167-14-3 | *Vanilla tahitensis*, ext. |
| 94266-47-4 | *Citrus,* ext. |
| 94-46-2 | Isoamyl benzoate |
| 94-48-4 | Geranyl benzoate |
| 94-86-0 | Propenylguaethol |
| 95-16-9 | Benzothiazole |
| 95-65-8 | 3,4-Xylenol |
| 95-87-4 | 2,5-Xylenol |
| 96-48-0 | 4-Hydroxybutanoic acid lactone |
| 97-42-7 | Carvyl acetate |
| 97-53-0 | Eugenol |
| 97-54-1 | Isoeugenol |
| 97-64-3 | Ethyl lactate |
| 97-89-2 | Citronellyl isobutyrate |
| 98-01-1 | Furfural |
| 98-02-2 | Furfuryl mercaptan |
| 99-72-9 | 2-(p-Tolyl)propionaldehyde |
| 997-29-7 | Valencene |
| 99-83-2 | alpha-Phellandrene |
| 99-86-5 | p-Mentha-1,3-diene |
(d) water; and
(e) optionally, one or more adjuncts selected from the group consisting of: buffers, , solvents, stabilizers, defoamers, thickeners, , additional surfactants, chelants, hydrotropes, additional antimicrobial compounds, polymers, pH adjusters and preservatives.; and
wherein the composition has a pH of from about 2 to about 4.5 as measured at 20°C

2. The composition of claim 1, wherein the composition is substantially free of quaternary ammonium antimicrobial compounds.

3. The composition of claims 1 or 2, wherein the composition includes less than 0.5% by weight of volatile components other than water with a vapor pressure over 0.1 mm Hg at 20°C.

4. The composition of any of claim 1 to 3, wherein the composition further comprises an adjunct which is a C1 -C4 alcohol solvent preferably the C 1-C4 alcohol comprises ethyl alcohol at a level of 0.01 to 0.50% by weight of the composition.

5. The composition of any of the preceding claims, wherein the fragrance comprises fragrance components selected from Table 1.

6. The composition of any of the preceding claims, wherein the acid is selected from the group consisting of acetic acid, citric acid, lactic acid, octanoic acid, benzoic acid, sorbic acid, fumaric acid and mixtures thereof.

7. The composition of any of the preceding claims, wherein the composition comprises from about 0.025% to about 5% by weight of the composition of the organic acid and from about 0.035% to about 1% by weight of the composition of the anionic surfactant.

8. The composition of any of the preceding claims, wherein all the components of the composition meet the EPA guidelines under CFR 180.940(a), CFR 180.950 or CFR 180.960.

9. A method of treating an inanimate food contact surface, the method comprising:
contacting a fragranced liquid composition according to any of the preceding claims with the inanimate surface.

10. The method of the preceding claim, wherein the method results in at least a 3 log reduction in a bacterial population within 5 minutes.

11. The method of claim 9, wherein the method results in at least a 3 log reduction in a bacterial population within 1 minute.
